Europäisches Patentamt

European Patent Office

Office européen des brevets

(19)

(11) Publication number: **0 025 711**
**B1**

(12)  **EUROPEAN PATENT SPECIFICATION**

(45) Date of publication of patent specification: **22.02.84**    (51) Int. Cl.³: **B 65 B 3/02**

(21) Application number: **80303227.5**

(22) Date of filing: **12.09.80**

(54)  Bag forming apparatus.

(30) Priority: **17.09.79 US 76447**
**17.09.79 US 76448**
**17.09.79 US 76449**
**17.09.79 US 76454**
**17.09.79 US 76453**
**17.09.79 US 76446**
**23.05.80 US 152715**
**23.05.80 US 152756**

(43) Date of publication of application:
**25.03.81 Bulletin 81/12**

(45) Publication of the grant of the patent:
**22.02.84 Bulletin 84/8**

(84) Designated Contracting States:
**CH DE FR GB IT LI NL SE**

(56) References cited:
**CH - A - 459 866**
**US - A - 3 432 986**
**US - A - 3 619 979**
**US - E - 27 302**

(73) Proprietor: **Developak Corporation**
**1611 South Pacific Coast Highway**
**Redondo Beach California 90277 (US)**

(72) Inventor: **Evers, Jack Rolf**
**4022 West 232nd Street**
**Torrance California 90505 (US)**
Inventor: **Bauerkemper, Michael Irwin**
**11702 Buford Street**
**Cerritos California 90701 (US)**

(74) Representative: **Hallam, Arnold Vincent et al,**
**E.N. LEWIS & TAYLOR 144 New Walk**
**Leicester LE1 7JA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Bag forming apparatus

This invention relates in general to bag forming machines, and more particularly to the forming of small size bags for the reception of a small amount of a product, for example, bags receiving products in the one to four ounce range.

In some bag forming, filling and closing apparatus such as the one disclosed in U.S. — A—3 432 986 issued March 18, 1969, a turret moved in an indexing manner about a generally fixed horizontal axis has a plurality of stations. Each of the stations includes an inner and an outer mandrel as well as a plunger for effecting the movement of the outer mandrel to the interior of the turret. In addition, a cam means cooperates with the inner end of the plunger providing for a positioning of the outer mandrel relative to the inner mandrel. Finally, there is also provided a heat sealing means to effect the heat sealing of triangular portions of the flat bottom of the sealed tube.

It has been observed that in the particular patent as well as other prior art the bag forming apparatus is greatly inefficient in that there is not provided an orienting means for engaging the bag while it is on a mandrel assembly and effecting the rotation of the bag about the axis of the mandrel assembly. Such rotation is necessary for proper orientation after filling for closing of the bag by a sealing operation.

According to the present invention there is included an orienting means for reducing the above-described inefficiency.

According to the invention there is provided a turret, means mounting said turret for indexing movement about a fixed generally horizontal axis, the turret having a plurality of stations, each of the stations having a mandrel assembly which includes an inner mandrel, and an outer mandrel, a plunger for each outer mandrel extending into the interior of the turret through the inner mandrel, cam means cooperating with the inner end of the plunger for positioning the outer mandrel relative to the inner mandrel, sealing means for heat sealing triangular portions of the flat bottom portion whereby the tube is formed into a flat bottom bag, and orienting means for engaging the bag while on the mandrel assembly and effectively rotating the bag about the axis of the mandrel assembly.

Preferably the invention includes clamp means which are cooperative with a fixed mandrel portion. The clamp means includes at least one clamp arm and a pivot mounted centrally of the clamp arm whereby pivotal movement is effected. A clamp surface which opposes the fixed mandrel portion and spring means which engages one end portion of the clamp arm and urges the clamp surface towards the fixed mandrel portion.

Advantageously, in a preferred embodiment, the invention further includes a heat sealer for effectively closing bags. A web pay-out assembly is also included which is cooperative with the heat sealer unit. There is also a combined heat sealer and cut off device which is utilized for taking a continuous length of material and heat sealing it into a continuous tube in order to provide the predetermined lengths of bags. In addition, there is a dancer roll arrangement which feeds and supplies a webbed material to the bag forming apparatus via a pouch forming apparatus which receives material from a printed web and provides it to the tube forming mandrel.

The present invention is further described hereinafter, by way of example, with reference to the accompanying drawings, in which:

Figure 1 is a schematic elevational view showing the general operation of the turret in accordance with this invention.

Figure 2 is a fragmentary elevational view of the turret arrangement of Figure 1, with parts omitted for purposes of clarity.

Figure 3 is an enlarged fragmentary elevational view with parts broken away and showing generally the mounting of mandrels and clamp means associated therewith.

Figure 4 is an enlarged fragmentary plan view taken generally along the line 4—4 of Figure 3.

Figure 5 is an enlarged fragmentary vertical sectional view taken longitudinally on the axis of the turret.

Figure 6 is an enlarged fragmentary sectional view taken generally along the line 6—6 of Figure 5.

Figure 7 is an enlarged fragmentary elevational view showing the bag rotating means at the four o'clock position of the turret.

Figure 8 is an enlarged fragmentary generally horizontal sectional view taken generally along the line 8—8 of Figure 7.

Figure 9 is an enlarged fragmentary generally vertical sectional view taken generally along the line 9—9 of Figure 7.

Figure 10 is a fragmentary generally horizontal sectional view taken along the line 10—10 of Figure 9.

Figure 11 is an enlarged fragmentary generally vertical sectional view taken along the line 11—11 of Figure 7.

Figure 12 is an enlarged fragmentary sectional view taken longitudinally of one of the bag rotating devices and shows the specific details thereof in its open position.

Figure 13 is an enlarged fragmentary schematic elevational view showing the manner in which a segment of the cam for one of the outer mandrel supports is movable away from the remainder of the cam.

Figure 14 is an enlarged fragmentary horizontal section view taken generally along the line 14—14 of Figure 13.

Figure 15 is an enlarged fragmentary vertical section view taken along the line 15—15 of Figure 13.

Figure 16 is an enlarged fragmentary vertical sectional view showing one form of manifold means for effecting the direction of air under pressure through the outer mandrel supports so as to assure discharge of the formed bags from the outer mandrels.

Figure 17 is an elevational view with parts broken away and shown in section.

Figure 18 is a plan view with parts broken away and shown in section.

Figure 19 is a fragmentary transverse vertical sectional view taken generally along the line 19—19 of Figure 17.

Figure 20 is a fragmentary elevational view showing an upper part of a bag having the upper end heat sealed closed in accordance with this invention.

Figure 21 is a plan view of the heat sealer and shows the general details thereof.

Figure 22 is a side elevational view of the heat sealer with parts thereof broken away and shown in section.

Figure 23 is an end elevational view of the heat sealer as viewed at the right end thereof.

Figure 24 is an end elevational view of the heat sealer as viewed at the left end thereof.

Figure 25 is a schematic view showing the drive for the heat sealer.

Figure 26 is an elevational view with parts broken away and shown in section of a web pay-out assembly in accordance with this invention.

Figure 27 is a fragmentary vertical sectional view taken generally along the line 27—27 of Figure 26 and shows further the details of the hub and the spool retaining pins.

Figure 28 is an enlarged fragmentary sectional view taken generally along the line 28—28 of Figure 26 and shows specifically the resilient mounting of one of the pins.

Figure 29 is an elevational view of the heat sealer and cut-off device with parts broken away and shown in section.

Figure 30 is an end elevational view taken from the right end of Figure 29.

Figure 31 is an end elevational view taken from the left end of Figure 20.

Figure 32 is an enlarged fragmentary sectional view taken through one of the pivots.

Figure 33 is an end elevational view of the dancer roll assembly.

Figure 34 is a vertical sectional view taken along the machine wall generally along the line 34—34 of Figure 33 and shows the dancer roll assemblies in elevation, parts being broken away and shown in section.

Figure 35 is a fragmentary schematic sectional view taken generally along the line 35—35 of Figure 34 and shows the specific mounting of the air motors and the coupling thereof to the upper shafts of the dancer roll assemblies.

Figure 36 is a fragmentary elevational view of the heat sealing and cooling devices and the support and drive mechanisms therefor in association with the turret which is shown in phantom lines.

Figure 37 is a horizontal sectional view taken generally along the line 37—37 of Figure 30 and shows specifically the details of the cam actuated main drive.

Figure 38 is a fragmentary enlarged vertical sectional view taken along the line 38—38 of Figure 30 and shows the specific mounting of one set of support arms and the drive mechanism therefor.

Figure 39 is an enlarged fragmentary vertical sectional view taken generally along the line 39—39 of Figure 38 and shows further the specific mounting of the support arms and the manner in which they are positioned.

Figure 40 is an enlarged fragmentary horizontal sectional view taken generally along the line 40—40 of Figure 39 and shows further the details of the mounting of the support arms and the cams for positioning the same.

Figure 41 is a schematic side elevational view of the pouch forming apparatus.

Figures 42a—42e are schematic elevational views showing the sequence of forming a pouch.

Figure 43 is an enlarged side elevational view of the mandrel assembly with parts thereof broken away and other parts omitted for purposes of clarity.

Figure 44 is a horizontal sectional view taken generally along the line 44—44 of Figure 43 and shows the two mandrels of the mandrel assembly.

Figure 45 is a transverse vertical sectional view taken generally along the line 45—45 of Figure 43 and shows the details of the individual mandrels and the manner in which tube grippers are carried thereby.

Figure 46 is an enlarged fragmentary vertical sectional view taken generally along the line 46—46 of Figure 45 and shows the manner in which an actuating arm is associated with one of the mandrels.

Figure 47 is an enlarged fragmentary vertical sectional view taken along the line 47—47 of Figure 43 and shows the general details of a tube gripper associated with one of the mandrels.

Figure 48 is a transverse vertical sectional view taken generally along the line 48—48 of Figure 43 with parts broken away and shown in section for purposes of clarity.

Figure 49 is a longitudinal vertical sectional view taken generally along the line 49—49 of Figure 48 and shows specifically the details of cam actuated drives.

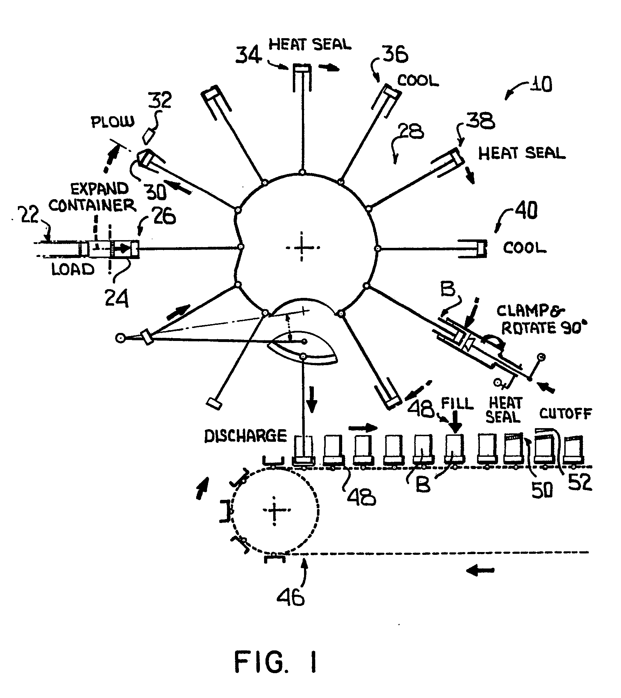

Referring now to the drawings in detail, reference is made first to Figure 1 where there is schematically illustrated the operation of that portion of the machine to which this invention relates. The machine is generally identified by the numeral 10 and includes a mechanism 22.

The mechanism 22 forms in step by step movements from a continuous web a continuous tube with an upstanding side seam. The tube is then cut at lengths and sealed together on a horizontal plane to form a closed end tube 24. This tube is placed on a mandrel assembly 26 of one station of a plural station turret, generally identified by the numeral 28. This occurs at the nine o'clock position of the turret in the illustrated embodiment of the invention.

The turret turns in a clockwise direction and immediately after the turret begins indexing, the mouth portion of the tube 24 is gripped so as to be radially restrained, and the mandrel assembly 26 serves to radially stretch the clamped tube, thereby partially forming the sealed end thereof into a generally flat bottom having a pair of upstanding triangular portions 30 at opposite sides of the flat bottom portion. Such a partially formed bag bottom is disclosed in the aforementioned US—A—3,432,986. As the turret is next indexed, the triangular bottom portions 30 are flattened downwardly against the generally flat bottom by means of suitable plow means 32.

The tube 24, which has now generally become a bag, has the triangular bottom portions 30 heat sealed to the generally flat bottom portion at the twelve o'clock position by means of a heat sealer 34. At the one o'clock position, the heat sealed bag bottom is cooled by a cooling device 36. Then at the two o'clock position, the heat sealed bottom is further heat sealed by a second heat sealer 38. When the turret next indexes, at the three o'clock position, the heat sealed bag bottom is again cooled by a cooler 40.

The resultant bag B is then engaged at the four o'clock position by a bag rotating and orienting mechanism 42.

The oriented bag is then moved to the six o'clock position wherein it is discharged from the turret 28 into an aligned pocket 44 of a take-away conveyor 46.

The formed bags B, as is schematically illustrated in Figure 1, are filled with a suitable product by means of a filler 48 after which the upper opened mouth of the bag is heat sealed closed along a sloping line by a heat sealer 50. The bag B above the heat seal formed by the heat sealer 50 is cut away to define scrap 52 which is drawn up into a vacuum receiver (not shown).

It is to be first of all understood that although only a portion of the machine 20 has been illustrated, the machine 20 is basically divided into a sanitary half and a machinery half by an upstanding wall 54. The wall 54 also functions as the support structure for the various components of the machine. The wall 54 is of a generally honey comb construction and includes an outer plate 56 and an inner plate 58 which are separated by ribs and stringers of which only the stringers 60 are shown. It is to be understood that the wall 50 is of a very high structural strength while at the same time being relatively light in weight.

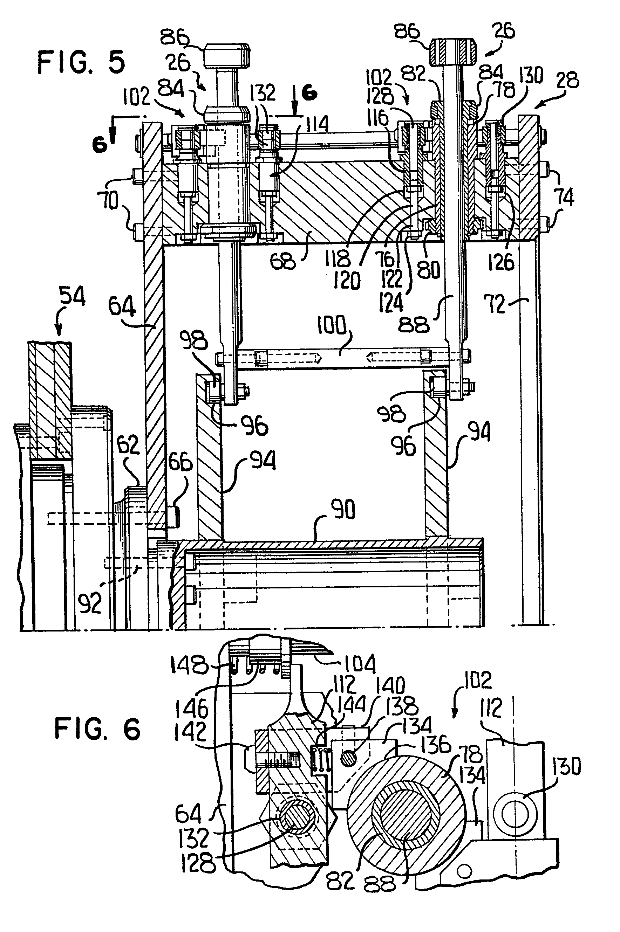

Referring now to Figure 5 in particular, it will be seen that the turret 28 includes a driving flange 62 which is rotatably journaled relative to the wall 54 and which is periodically indexed one station by a conventional indexing drive mechanism (not shown). The driving flange 62 has removably bolted thereto a rear plate 64 of the turret 28 by means of suitable bolts 66.

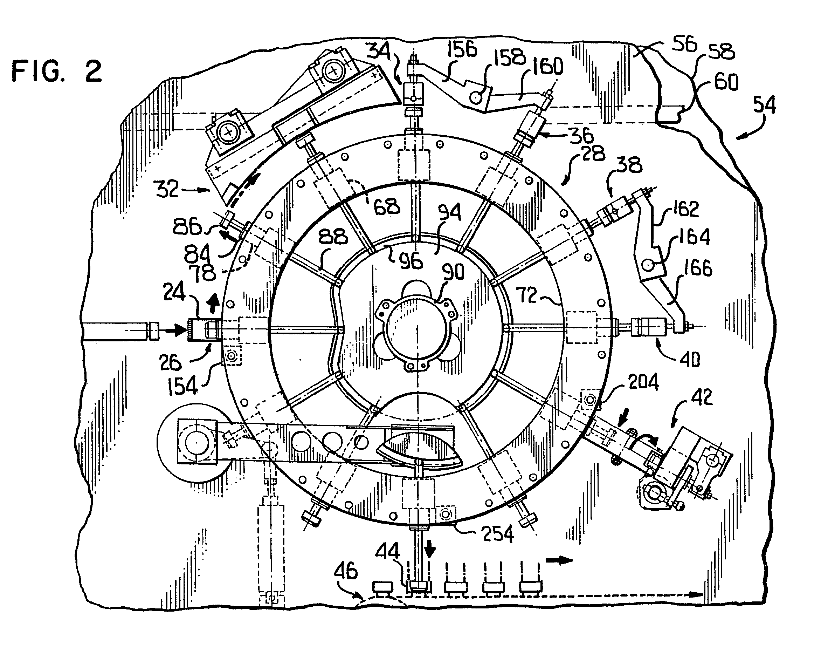

As is best shown in Figure 2, in the preferred embodiment of the invention, the turret 28 has twelve stations. At each of the stations there is a spacer block 68 which is rigidly secured to the front face of the plate 64 by bolts 70. The front ends of the spacer block 68 are joined together by an annular front plate 72 which is secured to the front end of the spacer block 68 by bolts 74.

As is best illustrated in Figure 5, at each station of the turret assembly 28, there are two mandrel assemblies 26, the machine 20 being constructed to form two tubes 24 and to present two closed end tubes 24 to the turret upon each indexing thereof.

As is best illustrated in Figure 5, each mandrel assembly 26 includes a bore 76 radially through the spacer block 68. Clamped in the bore 76 is a stepped sleeve 78 which has an externally threaded inner end having threadedly engaged thereon a locking nut 80 which clamps the sleeve 78 in place.

The sleeve 78 has rotatably journaled therein a further stepped sleeve 82 which carries for rotation therewith an inner mandrel 84.

Each mandrel assembly 26 also includes an outer mandrel 86 which is carried by an elongated support or plunger 88 on which the mandrel 86 is mounted for rotation and with which the mandrel 86 is radially displaceable relative to the inner mandrel 84. It is to be noted that the plunger 88 is slidably journaled with the sleeve 82.

As is also best illustrated in Figure 5, the turret assembly 28 includes a drum shaft 90 which is secured to the driving flange 62 by bolts 92 for rotation with the flange. The drum 90 has fixedly secured thereto a pair of cams 94 each of which defines a cam track 96 in which there is positioned a cam follower 98 carried by the inner end of a respective one of the plungers 88. In order to provide a rigid structure and to assure alignment of the cam followers 98 in the respective cam tracks 96, inner end portions of the plungers 88 are joined together by a spacer bar 100.

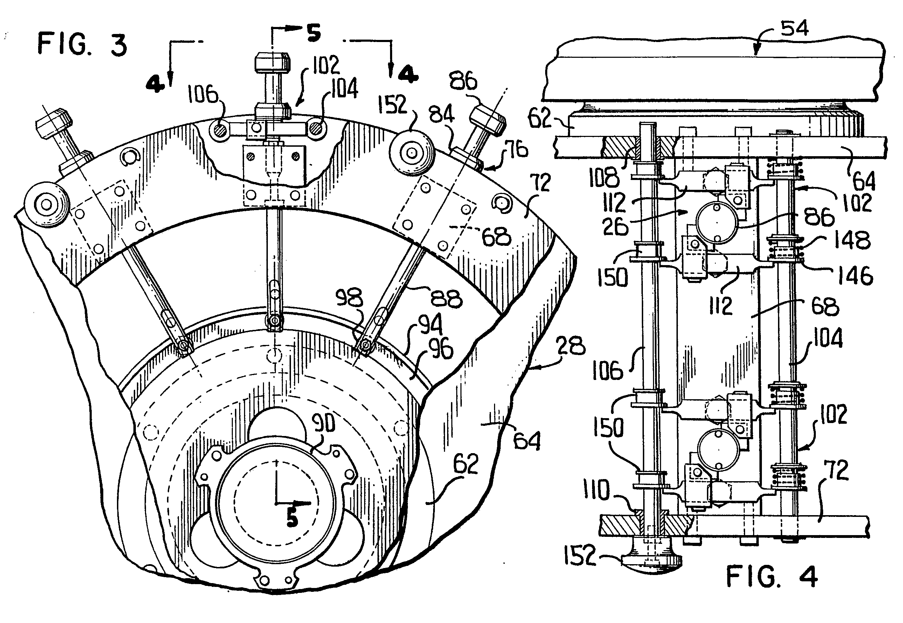

Referring now to Figures 4 and 6, it will be seen that associated with each of the mandrel assemblies 26 is a clamp assembly, generally identified by the numeral 102. The two adjacent clamp assemblies 102 are in part carried by the associated spacer block 68 and in part by a pair of rods 104, 106 which extend between the plates 64, 72 with the rod 104 being fixed and the rod 106 being slidable relative to the plates. To this end, the rod 106 is slidably journaled in bushings 108, 110 carried by the plates 64, 72, respectively.

Each clamp assembly 102 includes a pair of clamp arms 112 which are identical but which are mounted in right and left relation. Each clamp arm 112 has the central portion thereof mounted on a pivot shaft assembly 114 which extends through an associated bore in the spacer block 68. As is best shown in Figure 5, each pivot shaft assembly 114 includes a flanged sleeve 116 which is seated in a large diameter outer bore portion 118. The inner end of the sleeve 116 has threaded therein a stud 120 which extends through a reduced diameter bore portion 122 and is provided with a securing nut 124 on an inner end thereof. The stud 120 also carries a lock nut 126.

The sleeve, in turn, carries a pivot stud 128 which has an enlarged head 130. Each pivot stud 128 carries half bushings 132 which are received within the associated clamp arm 112.

Each clamp arm 112 carries a clamp block 134 having an arcuate clamping surface 136 which corresponds to the outer surface of the sleeve 78. Each clamp block 136 is pivotally mounted on a pivot pin 138 which is carried by a U-shaped bracket 140 which is fixedly secured to an adjacent end portion of the clamp arm 112 by means of a fastener 142. A spring 144 normally centers the clamp block 134.

Each end of each clamp arm or lever 112 is of reduced thickness. Associated with a respective end of each clamp arm 112 and carried by the rod or shaft 104 is a flanged sleeve 146 which is urged towards the clamp arm by a spring 148. The opposite end of each clamp arm 112 is engaged by a flanged sleeve 150 which is fixedly mounted on the shaft or rod 106.

It will be readily apparent from Figures 4 and 6 that the clamp assemblies 102 are spring loaded so as to normally urge the clamp locks 134 against the radial outer end of the sleeve 78. However, since the rod 106 is axially movable, when moved to the front, as viewed in Figure 4, the flanged sleeves 150 will pivot the clamp arms 112 to release positions. Suitable cam means, to be described hereinafter, urge the clamp assemblies 102 to the release condition at preselected points. In order that the clamp assemblies 102 may be manually released, the front end of each of the rods 106 is provided with a grip button 152.

Referring once again to Figures 1 and 2, it will be seen that when one of the stations of the turret 28 is indexed to the nine o'clock position, the rod 106 has the rear end thereof engaged with a release cam 154. At this time, the closed end tube 24 is forced onto the mandrel assembly 26 with the tube being telescoped over the mandrels 86 and 84 and over the outer portion of the sleeve 78. With the tube in this position, the turret 28 is indexed one station and as soon as it begins to index, the rod 106 is freed from the cam 154 with the result that the clamp blocks 134 engage the mouth portion of the tube so as to clamp it relative to the mandrel assembly 26. Immediately thereafter, due to the shape of the cam track 96, the associated plunger 88 is moved radially outwardly with the mandrel 86 serving to stretch and flatten the bag bottom leaving the two upstanding triangular bottom portions 30, as previously described. As the then partially formed bag bottom moves in a clockwise direction, the plow 32 serves to flatten the triangular bottom portions 30 followed by the heat sealing at the twelve o'clock position, the cooling at the one o'clock position, followed by the heat sealing at the two o'clock position and further cooling at the three o'clock position. With respect to these heat sealing and cooling operations, it is to be noted that the heat sealing unit 34 is carried by a support arm 156 which is pivotally mounted on a shaft 158 carried by the wall 54. Also pivotally mounted on the shaft 158 is a support arm 160 which carries the cooling unit 36. It is to be understood that the heat sealing unit 34 and the cooling unit 36 are moved away from the paths of the mandrel assemblies 26 during the indexing of the turret 28. Pivoting of the support arms 156 and 160 is accomplished by a mechanism which in and of itself is not a part of this invention.

In a like manner, the heat sealing unit 38 is carried by a support arm 162 which is mounted on a pivot shaft 164. The same pivot shaft 164 carries a support arm 166 for the cooling unit 40.

After the bag bottom has been completed, the then formed open end bag B is complete as it passes from the three o'clock position towards the four o'clock position. However, at the three o'clock position, the side seam of the bag is disposed lowermost whereas for proper orientation after filling for closing of the bag by a sealing operation, it is necessary that the side seam be facing the wall 54. This is the purpose of the bag rotating and orienting mechanism 42.

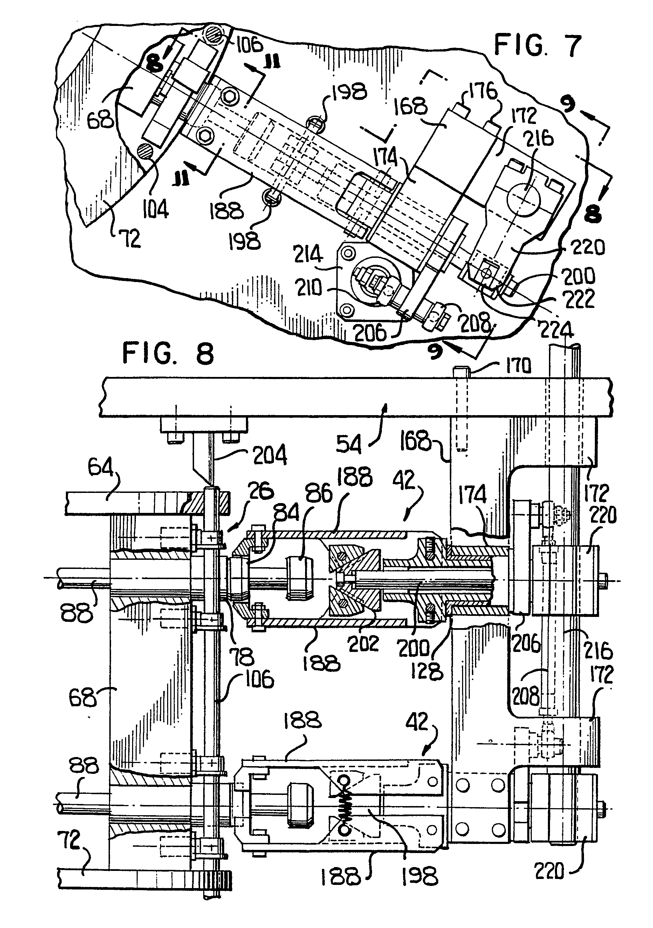

Referring now to Figures 7—12, it will be seen that there are two of the devices 42. The devices are identical and are carried by a support member 168 which projects from and is rigidly secured to the wall 54 by means of suitable bolts 170. The support member 168 has a pair of flanges 172 projecting from one side thereof.

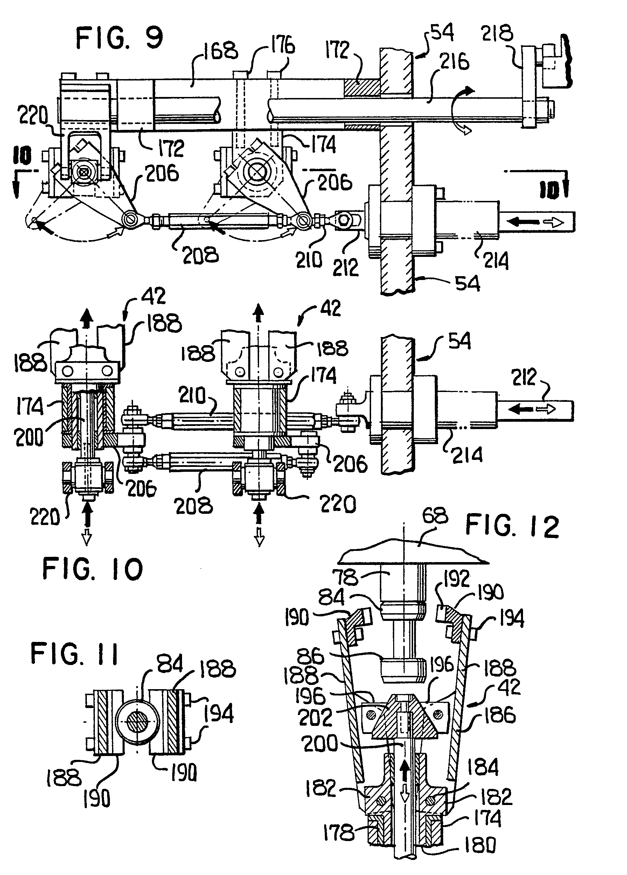

The support 168, as is best shown in Figure 9, has secured to the underside thereof a mounting block 174 for each of the devices 42. The mounting blocks 174 are secured to the support 168 by bolts 176.

Each mounting block 174 has mounted therein a bushing 178 for its respective device 42. The bushing 178 has rotatably journaled therein a tubular shaft 180 which carries at the opposite sides thereof a pair of lugs 182, as is best shown in Figure 12. Each lug 182 carries a pivot pin 184 on which there is pivotally mounted a U-shaped portion 186 of a clamp arm 188. The opposite end of each clamp arm 188 is generally planar and carries a clamp block 190 having a clamping surface 192 which is complementary to the outer surface of the inner mandrel 84. The clamp blocks 190 are removably secured to the clamp arms 188 by bolts 194.

Central portions of the clamp arms 188 carry cam blocks 196 disposed in opposed relation. Further, central portions of the clamp arms 188 are drawn together by tension springs 198. The springs 198 serve to normally urge the clamp blocks 190 together to clamp a newly formed bag onto the inner mandrel 84.

In order that the clamp blocks 190 may be spread apart, there is provided a plunger 200 which carries a cam 202 engageable with the cams 196. When the cam 202 is in its retracted position, the clamp blocks 190 are operative. When the cam 202 is extended, as is shown in Figure 12, the clamp blocks 190 are separated and are in their released position. This is the normal position of the clamp arms 188.

It is to be noted from Figure 8, for example, that when the turret 28 is indexed, the axis of each device 42 is aligned with the axis of its associated mandrel assembly 26. It is also to be noted that there is a cam 204 carried by the walls 54 which is then engaged by the rod 106 so as to release the clamp mechanism clamping the bag to the mandrel sleeve 78. The bag is now ready to be rotated ninety degrees. To this end, each sleeve 180 has mounted on the outer end thereof a crank arm 206. The two crank arms 206 are connected by a link 208 for movement in unison. The crank arm 206 which is disposed remote from the wall 54 also has connected thereto an actuating link 210. The actuating link 210 is coupled to the forward end of a plunger 212 which is mounted for axial movement in a sleeve type support 214 carried by the wall 54 and which extends through the wall 54, as is clearly shown in Figure 10.

However, before the devices 42 can be rotated, it is necessary that the cams 202 be retracted so that the clamp blocks 190 may clamp the inner portions of the bag to the inner mandrel 84. This is accomplished by moving each plunger 200 along the axis thereof. To this end, there is rotatably journaled in the flanges 172 a shaft 216 which extends through the wall 54 and has connected to the rear end thereof a crank 218 to effect rotation thereof. The crank 216 carries a pair of crank arms 220 which have bifurcated portions 222 engaging pivotally mounted blocks 224 carried by the plunger 200, as is best shown in Figure 7. When the shaft 216 is rotated, the plungers 200 are withdrawn, withdrawing the cams 202 and permitting the clamp arms 188 to move together in response to the urging of the springs 198. The bag is thus gripped to the inner mandrel 84 for rotation by the respective device 42 together with the respective mandrels 84, 86.

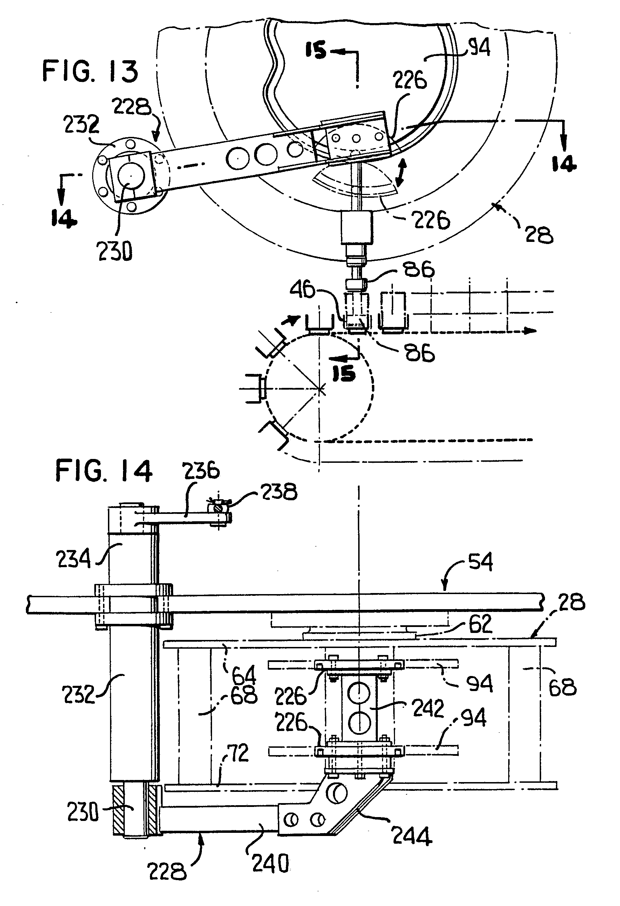

After each bag has been oriented, it is now ready for discharge from the turret 28 into one of the pockets 44 of the conveyor 46. This is accomplished by radially outwardly projecting the outer mandrel 86 down into the underlying aligned pocket 44, as shown in phantom lines in Figure 13. However, the cams 94 are not sufficiently large so as to have a stroke which will enable this movement of the outer mandrel 86. Accordingly, as is best illustrated in Figure 13, each cam 94 has a lowermost cam segment 226 which is downwardly displacable as shown in phantom lines in Figure 13. The cam segments 226 are carried by a rocker arm assembly which is generally identified by the numeral 228 for movement from their positions forming parts of the cams 94 and the downwardly shift of positions shown in dotted lines in Figure 13.

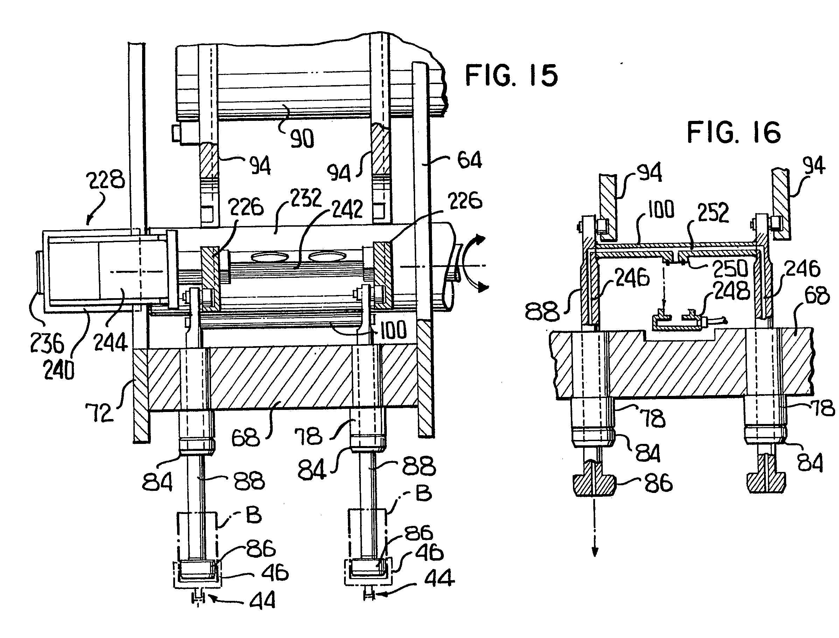

The rocker arm assembly 228, as is best shown in Figure 14, includes a shaft 230 which is carried by sleeve like supports 232 and 234 secured to and extending from opposite sides of the wall 54. The rear end of the shaft 230 is provided with a crank arm 236 which has coupled thereto an actuating link 238 which is vertically reciprocated in timed relation to the indexing of the turret 28 by a mechanism which in of itself does not form part of this invention.

The rocker arm assembly 228 includes an arm 240 which extends from the shaft 230 at the front of the turret 28 and includes a support portion 242 carried by an angle bracket arrangement 244. The support portion 242 has fixedly secured thereto the cam segments 226 for movement therewith.

It will be readily apparent that when the rocker arm assembly 228 is actuated to move the arm 240 in a downward direction, as viewed in Figure 13, the cam segments 226 will be moved downwardly therewith so as to move the plungers 88 downwardly sufficiently to position the mandrels 86 in the pockets 44 of the conveyors. The bags B may engage in the pockets 44 with such a friction fit so that when the mandrels 86 are withdrawn, the bags B will remain in the pockets 46. On the other hand, if it is necessary, the plungers 88 may be hollow so as to have a compressed air passage 246 extending therethrough, as is best shown in Figure 16. The compressed air passages 246 will open at the outer ends of the mandrels 86 and compressed air may be directed therethrough so as to force the bags B off of the mandrels 86 while they are within the pockets 44.

Any type of air supply may be provided. A simple manner of providing the necessary air would be providing a fixed manifold 248 and providing the cross bar 100 with plug portions 250 which are engagable with the manifold 248 in generally sealed relation to receive air therefrom in timed relation. The cross bars 100 may be provided with air passages 252 which open into the air passages 246.

Returning once again to Figure 2, it is to be noted that there is carried by the wall 54 a further clamp release cam 254 which is positioned to be engaged by the rod 106 when the mandrel assembly 26 in question is at the six o'clock position. Thus the clamp assemblies 102 associated with the mandrel assemblies 26 are released at the time when the mandrels 86 are projected to discharge the formed bags.

At this time it is pointed out that the illustrated and described portions of the machine 20 are only parts of that machine. As described above, the turret 28 is indexed at regular intervals. After each indexing of the turret, other drive mechanisms which operate in timed relation to the indexing of the turret serve to drive the accessories to effect the necessary heat sealing, cooling, bag orientation and bag discharge. Inasmuch as the drive for the accessories may be of any conventional type, no attempt has been made here to specifically illustrate the details of that drive.

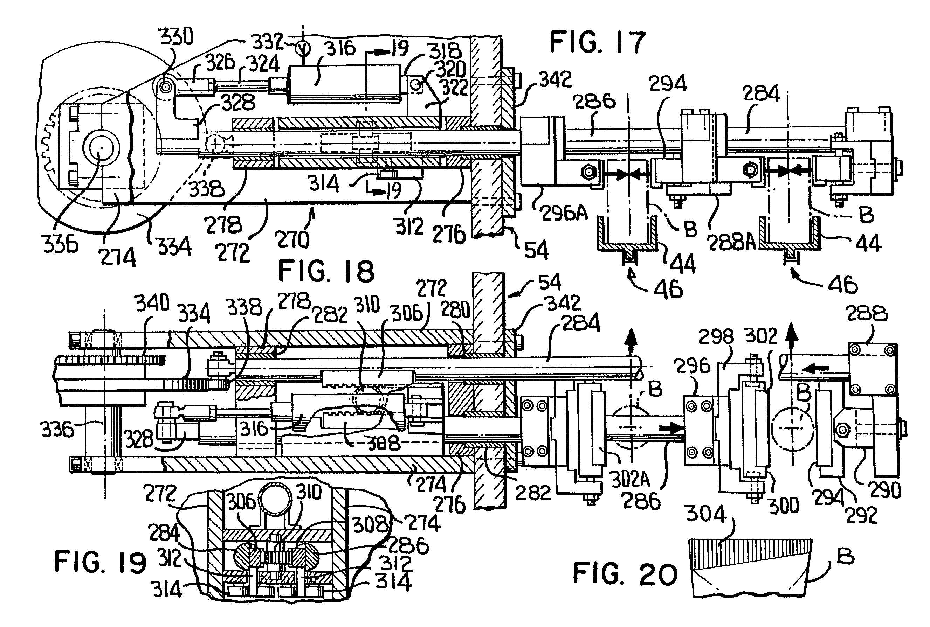

Referring now to Figures 17—20 in detail, it will be seen that the heat sealer is generally identified by the numeral 270 and it is carried by the wall 54. The heat sealer 270 includes a suitable support structure including a pair of support plates 272, 274 which are rigidly secured to the left side of the wall 54 and project therefrom in spaced parallel relation. The support plates 272, 274 are maintained in spaced relation by spacers 276, 278, as is best shown in Figure 18. The spacers 276, 278 have bores therethrough which are provided with bushings 280, 282 in which there are mounted for axial reciprocation parallel members 284, 286 which are in the form of rods. The end of the rod 284 is provided with a bracket 288 which is generally L-shaped in configuration and includes a mounting element 290 pivotally mounting a holder 292 for a heat sealing element 294 which is preferably of the electrical energized type.

The right hand end of the rod 286 is provided with a bracket 296 which, in turn, carries a bracket element 298 which mounts for pivotal movement a holder 300 for a heat sealing element 302. It is to be noted that the holder 292 is mounted for pivoting about a vertical axis while the holder 300 is mounted for pivoting about a horizontal axis. In this manner, complete alignment of the opposed faces of the heat sealing elements 294, 302 is assured.

In the case of the machine for which the heat sealer 270 is designed, two heat sealing operations are performed simultaneously. Accordingly, in spaced relation to the bracket 288, the rod 284 carries a similar L-shaped bracket 288A which in turn carries a heat sealing element 294A. In a like manner, an intermediate portion of the rod 286 carries a bracket 296A which supports a heat sealing element 302A.

With respect to the heat sealing elements 294, 302, these elements are spaced apart a sufficient distance for a filled bag B to have the upper end portion thereof passed therebetween, the bag B being carried by a pocket 44 of a conveyor 46. The conveyor 46 is indexed so as to stop the filled bag B between the heat sealing elements. The rods 284, 286 are then moved in opposite directions to move the heat sealing elements 294, 302 together to effect a generally trapezoidal heat sealing of the upper end of the bag B, as is best shown in Figure 20. The heat seal is generally identified by the numeral 304.

It is to be noted from the drawings that there are two conveyors 46 and thus two bags B are simultaneously presented to the heat sealer.

In order that the rods 284, 286 move simultaneously and in opposite directions, the rod 284 carries a rack segment 306 which opposes a rack segment 308 carried by the rod 286. Disposed between the rack segments 306, 308 is a pinion gear 310 which is meshed with the two rack segments. The pinion gear 310 may be suitably mounted in any desired manner including that shown in Figure 19.

It is also to be noted that the rods 284, 286 are prevented from rotating about their axes by guide elements 312 depending downwardly therefrom. It is to be noted that the guide elements have their lower portions passing between a pair of guide rollers 314.

The rods 284, 286 are constantly urged towards an operative position by means of a fluid cylinder 316. The fluid cylinder 316 has a mounting support 318 which is journaled on a pin 320 carried by brackets 322. A piston rod 423 extends from the opposite end of the cylinder 316 and has an adjustable fitting 326 which is pivotally connected to a bracket 328 by a pivot pin 330. The bracket 328 is rigidly secured to the left end of the rod 286. A suitable fluid under pressure, such as air, is directed into the left end of the cylinder 316 through a pressure regulating and control valve 332. In this manner the heat sealing elements may be engaged with a bag to be heat sealed under a controlled pressure or force.

The fluid cylinder 316 is overridden by means of a cam 334 which is journaled on a shaft 336 extending between the support plates 272, 274. The cam 334 is engaged by a cam follower 338 carried by the left end of the rod 284.

It is to be understood that the cam 334 is periodically rotated one revolution in timed relation to the indexing of the conveyors 46 by a suitable drive mechanism, not shown. The drive mechanism is coupled to the cam 334 through a drive sprocket 340.

As stated above, the fluid cylinder 316 constantly urges the rod 286 to the right. The racks 306, 308 and the pinion 310 cooperate to constantly urge the rod 284 to the left thereby urging the heat sealing elements 294, 302 together. The cam 334, however, positions the rods 284, 286. The cam 334, in its stopped position, causes the heat sealing elements to be spaced apart. When the cam 334 is rotated, the fluid cylinder 316 causes movement of the heat sealing elements together and finally causes the heat sealing elements to clamp closed the upper end portion of the bag B and heat seal the same closed under a controlled force as determined by the fluid pressure in the fluid cylinder 316.

At this time it is pointed out that the wall 54, dividing the machine into a sanitary part and a machine part has all of the operating mechanism of the heat sealer 270 mounted to the left thereof and all of the heat sealing elements to the right thereof. Where the rods 284, 286 extend through the wall 54, a suitable closing and sealing plate 342 is provided.

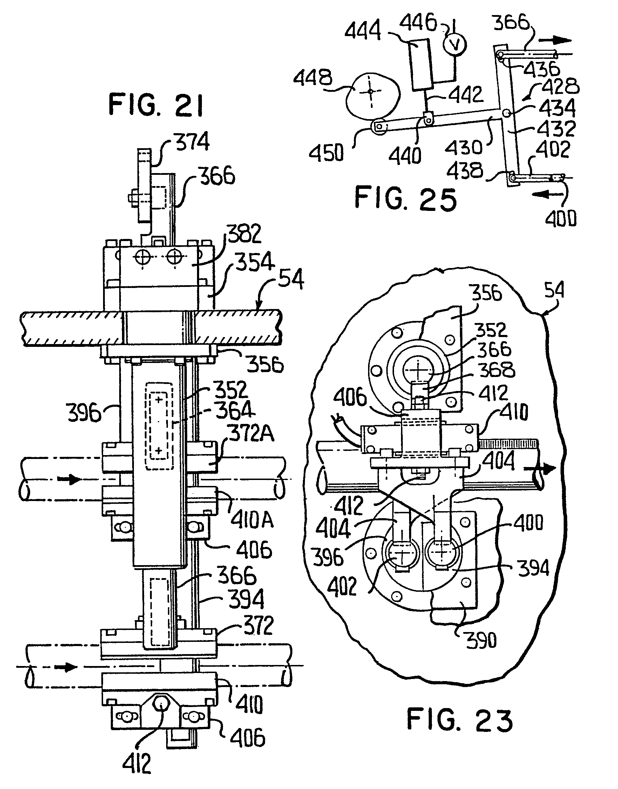

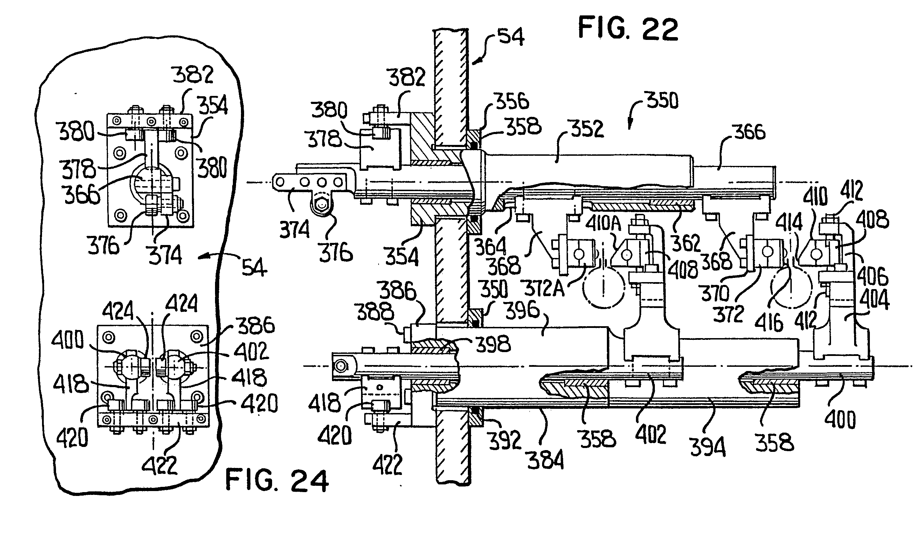

Referring now to Figures 21—25 in detail, it will be seen that the heat sealer, which is generally identified by the numeral 350, is carried by a combined dividing and support wall 54. With particular reference to Figure 22, it will be seen that the heat sealer 350 includes an upper combined guide and support member 352 which is provided at the left hand thereof with a mounting flange 354. The member 352 extends through the wall 54 and is suitably secured in place by bolts. In addition, the opening through which the member 352 passes is closed by a sealing flange 356 having a sealing ring 358 mounted therein.

The combined support and guiding member 352 is of a tubular construction and is provided in the opposite ends thereof with guide bushings 360 and 362. The member 352 is continuous except for a slot 364 in the underside thereof, which slot will be described in detail hereinafter.

A support member 366 extends through the member 352 and is mounted therein for freedom of axial movement therethrough. The support member 366 has fixedly secured on the right end thereof a depending mounting bracket 368 which has a support flange 370 carrying a heat sealing element 372.

The opposite end of the support member 366 is provided with a drive member 374 which carries the cam follower 376.

An intermediate portion of the support member 366 disposed adjacent of the mounting flange 354 carries a guide plate 378 which is positioned between a pair of guide rollers 380 depending from a support plate 382 which is secured to the mounting flange 354. In this manner the support member 366 is prevented from rotating about its axis.

It is to be noted that a second mounting bracket 368 extends upwardly through the opening 364 and is secured to an intermediate portion of the support member 366. A heat sealing member 372A is carried by a mounting plate 370 of the mounting bracket 368 in the same manner as is the heat sealing member 372.

The opposite end of the support member 366 is provided with a drive member 374 which carries the cam follower 376.

An intermediate portion of the support member 366 disposed adjacent of the mounting flange 354 carries a guide plate 378 which is positioned between a pair of guide rollers 380 depending from a support plate 382 which is secured to the mounting flange 354. In this manner the support member 366 is prevented from rotating about its axis.

It is to be noted that a second mounting bracket 368 extends upwardly through the opening 364 and is secured to an intermediate portion of the support member 366. A heat sealing member 372A is carried by a mounting plate 370 of the mounting bracket 368 in the same manner as is the heat sealing member 372.

The heat sealer 350 also includes a second combined support and guide member 384. The member 384 is also provided with a flange 386 at one end thereof which abuts against the wall 54 with the member 384 extending through an opening in the wall 54. The member 384 is secured to the wall 54 by bolts 388.

The opening in the wall 54 through which the member 384 passes is also closed by a cover plate 390 having a sealing ring 392 which engages the periphery of the member 384.

The member 384 is also of a tubular construction, but differs from the member 352 in that it has two bores therethrough in side by side parallel relation. Further, the member 384 is of a stepped construction having an elongated projecting end portion 394 and a shorter portion 396. Each of the bores through the member 384 is provided at the opposite ends thereof with bushings 398. A long support member 400 extends through the long part of the member 384 while a short support member 402 extends through the short portion of the member 384. While the right hand ends of the support members 400 and 402 are axially offset, the left hand ends thereof are in alignment.

The shaft 400 has mounted on the end portion thereof projecting beyond the portion 394 of the member 384 an upstanding mounting bracket 404. The mounting bracket 404 has a generally U-shape support portion 406 in which there is positioned a holder 408 for a heat sealing member 410. The heat sealing member 410 is disposed in opposition with the heat sealing member 372 for cooperation therewith.

The holder 408 is pivotally mounted with respect to the mounting portion 406 by a pair of opposed pivot pins 412 which are vertically disposed. This mounting of the heat sealing member 410 permits a heat sealing face 414 thereof to remain parallel to a heat sealing face 416 of the heat sealing member 372. It is also to be noted that an upper portion of the face of the heat sealing member 410 is cut away so that the face 414 is relatively narrow as opposed to the width of the face 416.

The end of the support member 402 also carries a bracket 404, which pivotally mounts a holder 408 which, in turn, carries a heat sealing member 410A. The heat sealing member 410A opposes the heat sealing member 372A for cooperation therewith.

The support members 400, 402, like the support member 366, are in the form of elongated circular cross sectional rods. In order to restrain each of the support member 400, 402, each support member has depending therefrom a guide plate 418 which is disposed between a pair of guide rollers 420 carried by a mounting plate 422 which is bolted to the mounting flange 386.

The ends of the support members 400, 402 carry opposed cam followers 424, as is best shown in Figure 24.

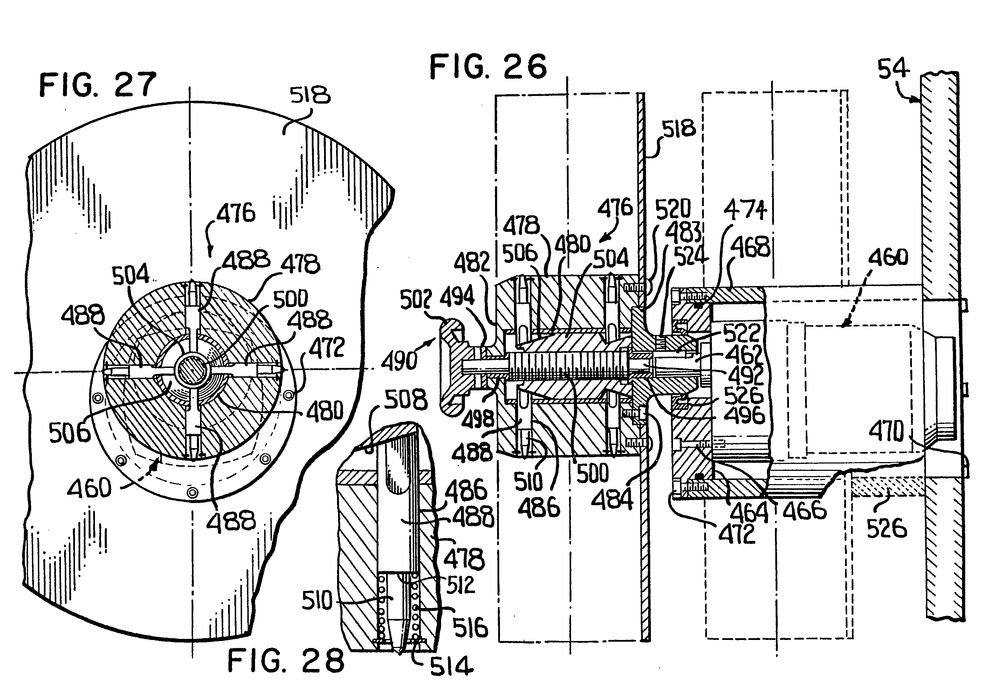

Referring now to Figure 25 in particular, it will be seen that there is illustrated the drive for the heat sealer 350, the drive being generally identified by the numeral 426 and being only schematically illustrated. The drive 426 includes a generally T-shaped drive crank 428 including a stem 430 and a cross bar 432. The crank 428 is pivotally mounted on a horizontal pivot 434 and the upper end of the cross bar 432 is provided with a slot 436 receiving the cam follower 376.

The lower end of the cross bar 432 is provided with a slot 438 which receives the cam followers 424.

The stem 430 has connected thereto by means of a fitting 440 a piston rod 442 of a fluid cylinder 444 which is preferably an air cylinder. The fluid cylinder 444 has connected thereto a fluid line in which there is a fluid pressure control valve 446 wherein the pressure of fluid within the fluid cylinder 444 may be controlled. By controlling the pressure of the fluid introduced into the cylinder 444, the force exerted by the heat sealing members may be controlled.

It is to be understood that the fluid cylinder 444 effects the closing movement of the heat sealing members. The heat sealing members are, however, moved apart by a mechanical means which preferably is in the form of a cam 448 which engages a cam follower 450 also carried by the stem 430. It is to be understood that the cam 448 is rotated in timed relation to the feeding of a web in the forming of a tube. It is also to be understood that side edges of the web, which extend vertically between each pair of heat sealing members, are disposed between the heat sealing surfaces 414, 416 of each set of heat sealing members. Normally the cam 448 holds the heat sealing members in spaced relation, as is shown in Figure 22. However, after the web has been advanced and a partially formed tube section has been aligned with the heat sealing members, the cam 448 is driven to permit the fluid cylinder 444 to urge the heat sealing members together and effect a heat sealing together of the edge portions of the web under controlled pressure as determined by the air pressure directed to the fluid cylinder. The dwell of the cam 448 controls the time of heat sealing contact with the web edge portions.

Referring now to Figures 26—28, it will be seen that the combined partition and mounting wall 54 supports the hub assembly. Further, the hub assembly is carried by a control unit which is generally identified by the numeral 460. The control unit 460 is in the form of an electric motor which is suitably controllable so as to suitably control the pay-out of a web carried by the hub assembly.

The control unit, which is preferably of an electrical type, in of itself is not a part of the invention and it is therefore not specifically described. However, the control unit 460 includes a control shaft 462 which projects from one end thereof. Further, the control unit 460 is carried by a mounting flange 464 to which it is secured by means of bolts 466. The mounting flange 464 is of a stepped configuration and is partially seated in and partially seated on a spacer 468 which is secured to one face of the wall 54 by bolts 470. The mounting flange 464 is sealed relative to the spacer 468 by a sealing ring 474 so as to seal the opening in the wall 54 through which the control unit 460 extends. Thus the right hand side of the wall 54 may define a machinery portion of the machine and the left hand side of the wall 54 may define a sanitary portion. The control device 460 is primarily positioned within the machine portion.

A hub assembly, generally identified by the numeral 476, is carried by the control shaft 462. The hub assembly 476 includes a hollow hub 478 having a chamber 480 formed therein. One end of the chamber 480 is closed by an integral flange 482 while the opposite end of the chamber 480 is closed by a separately formed flange 483 which is removably secured to one end of the hub 478 by bolts 484 so as to provide access to the interior to chamber 480.

The hub 478 is provided with two sets of circumferentially spaced radiating bores 486, the sets of bores being axially spaced. The bores 486 extend entirely through the hub 478 and have mounted therein for radial outward projection spool retaining pins 488. The pins 488 project into the chamber 480.

In the chamber 480 there is a positioning member 490 which has reduced end portions 492 and 494 extending into the flanges 483 and 482, respectively, and journaled in bushings 496 and 498. The positioning member 490 has an enlarged, externally threaded central portion 500 which has the opposite ends thereof in abutment with the bushings 496, 498 to axially position the positioning member 490.

The end portion 494 extends axially outwardly beyond the flange 482 and has mounted thereon a hand grip member 502 for rotating the positioning member 490 for a purpose to be described hereinafter.

A nut 504, which is internally threaded, is threaded on the central portion 500 of the positioning member 490. The nut 504 has two tapered surfaces 506, 508 which engage the inner ends of the two sets of pins 488 and function as cam surfaces. It will be seen that when the nut 504 is axially shifted to the left by rotating the positioning member 490, the cam surfaces 506, 508 will react on the pins 488 and urge the pins radially outwardly into wedged engagement with the core of a spool (not shown) mounted on the hub. In this manner the spool is locked on the hub in a way in which it may be quickly released.

Referring now to Figure 28 in particular, it will be seen that each of the pins 488 has an outer portion 510 of a reduced cross section thereby defining a radially outwardly facing shoulder 512. Further, the outer end of each of the bores 486 is closed by a removable stop member 514. A coil spring 516 surrounds the end portion 510 and abuts against the shoulder 512 and the stop member 514 and resists the outward movement of the pins 488. When the nut 504 is shifted to the right, the spring serves to force the pins radially inwardly to their inoperative positions.

It is also to be noted that the hub 478 carries a backing plate 518 which is secured thereto by means of suitable fasteners 520. The spool is shoved against the backing plate and it is automatically aligned thereby.

At this time it is to be noted that the flange 483 has a tubular extension 520. The tubular extension 520 is telescoped over the control shaft 462 and is locked thereto for rotation therewith by means of a key 522. Further, the hub extension 520 is axially fixed on the control shaft 462 by means of suitable set screws 524.

The mounting flange 464 carries a sealing ring 526 which engages the outer periphery of the hub extension 520 to form a seal therewith thereby excluding foreign matter passing from the machinery side of the wall 54 to the sanitary side thereof.

It is also to be noted from Figure 26 that there is a second hub assembly 476 which is spaced closer to the wall 54 than the above described hub assembly. The second hub assembly 476 is identical to the first hub assembly with the exception of the fact that it is mounted on the wall 54 by a spacer 526 of a different thickness than the spacer 468. The mounting of the second hub assembly is identical to that of the first except for this.

By providing the two different length spacers, it will be seen that the two hub assemblies may mount two web spools for paying out of the web in adjacent parallel relation.

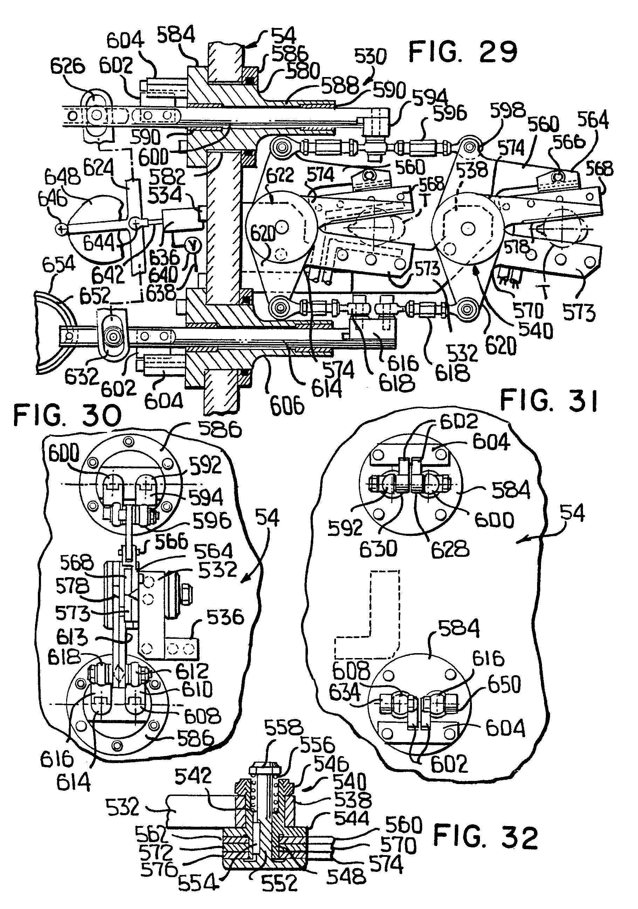

Referring now to Figures 29—32, it will be seen that the machinery wall 54 is vertically disposed and has mounted thereon the heat sealer and cut-off device which is generally identified by the numeral 530.

The device 530 includes a bracket 532 which extends laterally outwardly from one side of the wall 54 and is rigidly secured to the wall by means of suitable bolts 534. The bracket 532 is braced by a plate element 536 (Fig. 30).

At the outer end of the bracket 532 there is an upstanding portion 538 which carries a pivot, generally identified by the numeral 540.

The pivot 540 includes a tubular shaft 542 which has an intermediate circular flange 544 which abuts against one face of the ear 538. The end of the shaft 542 remote from the flange 544 is externally threaded and carries a nut 546 which serves to fixedly position the shaft 542 relative to the ear 538.

The shaft 542 extends beyond the flange 544 and defines a pivot shaft portion 548. A circular retainer 550 is disposed at the end of the pivot shaft portion 548 remote from the flange 544 and has a shaft 552 which extends through the tubular shaft 542. The shaft 552 is keyed to the shaft 542 at 554 so that the retainer 550 is fixed against rotation relative to the flange 544. The shaft 552 is slidable within the shaft 542 and it is constantly urged through the shaft 542 by a spring 556 which reacts on a shoulder of the shaft 542 and a nut 558 carried by the shaft 552.

The means for pinching off a tube, such as the tube T includes a blade like member 560 which has a circular hub portion 562 rotatably mounted on the pivot shaft portion 548. The member 560 is provided with a holder 564 which is pivotably mounted thereon by means of a pivot pin 566. The holder 564 carries a conventional heat sealing member 568 which is disposed above the path of the tube T.

There is a second blade like member 570 which has a flat circular hub portion 572 pivotally mounted on the pivot shaft portion 548 adjacent the hub 562. The blade like member 570 carries a conventional heat sealing member 573 which is disposed below the path of the tube T and is in cooperating alignment with the heat sealing member 568.

There is also a blade element 574 which has a flat circular hub 576 journaled on the pivot shaft portion 548 adjacent the hub 572. The blade element 574 is disposed above the path of the tube T and is provided with a sharpened edge 578.

With particular reference to Figure 32, it will be seen that the spring loading of the retainer 550 permits the retainer 550 to generally clamp together the hubs 562, 572 and 576 so as to maintain the hubs in position while at the same time permitting freedom of relative rotation of the hubs.

The device 530 includes actuating means for the blade like members 560 and 570 and the blade element 574. The actuating means includes an upper guide member 580 which extends through an opening 582 in the wall 54 and is fixed relative to the wall by a mounting flange 584. The opening 582 is sealed by a cover plate 586 which is telescoped over a right hand portion of the guide member 580.

The guide member 580 has a pair of bores 588 therethrough which are provided at opposite ends with bearing sleeves 590. A first plunger 592 (Fig. 30) extends through one of the bores 588 and has mounted on the right end thereof an adaptor block 594. A turn buckle like link 596 extends from the adaptor block 594 to an upstanding ear 598 on the blade like member 560 whereby reciprocation of the plunger 592 will effect pivoting of the blade like member 560.

The guide member 580 has mounted in the other bore 588 thereof a second plunger 600 which will be described in detail hereinafter.

Each of the plungers 592 and 600 is in the form of a circular cross sectional rod or shaft and in order to prevent rotation thereof while permitting axial movement thereof, as is best shown in Figures 29 and 30, each of the plungers carries an upstanding guide bar 602 which is engaged in a guide slot formed in a guide plate 604 secured to the mounting flange 584.

The actuating means includes a second guide member 606 which is identical to the guide member 580, but is inverted. A plunger 608 extends through one of the bores of the guide member 606 and has at the right end thereof an adaptor block 610 to which there is secured turn buckle like linkage 612 which, in turn, is connected at its opposite end to a depending ear 613 of the blade like member 570. Thus the plunger 608 controls the position of the blade like member 570.

A second plunger 614 extends through the other bore of the guide member 606 and carries at the right end thereof an adaptor block 616. Yet another turn buckle type link 618 connects the adaptor block 616 to an actuating ear 620 of a blade element 574 for actuating the blade element.

In the illustrated embodiment of the invention, there are two tube forming lines and, accordingly, the bracket 532 carries a second pivot 540. The second pivot 540 carries a second blade like member 560 which, in turn, carries a second heat sealing member 568. The second pivot 540 also carries a second blade like member 570 which carries a second heat sealing member 573. Finally, the second pivot 540 carries a second blade element 574.

In order to actuate the second blade like member 574, the plunger 600 has at the right end thereof a second of the adaptor blocks 594.

A further turn buckle type linkage 622 couples the second adaptor block 594 to the ear 598 of the second blade like member 574 to position the same.

The adaptor block 614 has coupled thereto another turn buckle linkage 612 (not shown) which is connected to the ear 613 of the blade like member 570 for actuating the blade like member. In addition, there is a second turn buckle linkage 618 extending between the adaptor block 616 and the ear 620 of the second blade element 574 for actuating the same.

The plungers 592, 600, 608 and 614 are actuated in sequence by a drive mechanism disposed to the left side of the plate 54. The drive mechanism is only schematically illustrated. In simplest terms, the drive mechanism includes an arm member 624 which is provided at one end with a guide slot 626 having received therein opposed cam followers 628 and 630 carried by the plungers 600 and 592, respectively. The opposite end of the arm 624 is provided with a guide slot 632 in which there is positioned a cam follower 634 carried by the plunger 608.

The arm 624 is constantly urged to the left by an extensible fluid cylinder 636 which has coupled thereto a fluid line 638 with a pressure control valve 640 mounted therein so that fluid at a controllable pressure may be directed to the fluid motor 636 for actuating the same.

The fluid motor 636 has a piston rod 642 which is connected to the arm 624 by means of a fitting 644. It will be seen that the fluid motor 636 is operable to move the arm 624 to the right, thereby moving the plungers 592 and 608 to the right so as to cause the heat sealing members 568 and 573 to move together to a closed cooperating position. The fluid motor 636 thus controls the force of pressure of the engagement of the heat sealing members with a tube during the pinching and heat sealing operation.

The arm 624 is also provided with a cam follower 646 which engages a cam 648. The cam 648 resists the movement of the arm 624 by the fluid cylinder 636 and controls the opening and closing of the heat sealing members.

The plunger 614 is actuated separately of plungers 592, 600 and 608. Accordingly, a cam follower 650 carried by the left end of the plunger 614 is engaged in a cam track 652 of a further cam 654. The cam 654 serves to effect reciprocation of the plunger 614 so as to actuate the blade element 574 to sever a closed end tube portion from the tube T after the closed end has been formed and heat sealed.

It is to be understood that the tubes T will be progressively fed in a step-by-step manner as the tubes are formed and that the cams 648 and 654 will be actuated in timed relation to the feeding of the tubes so that when the tubes are stationary they will be closed, heat sealed and severed.

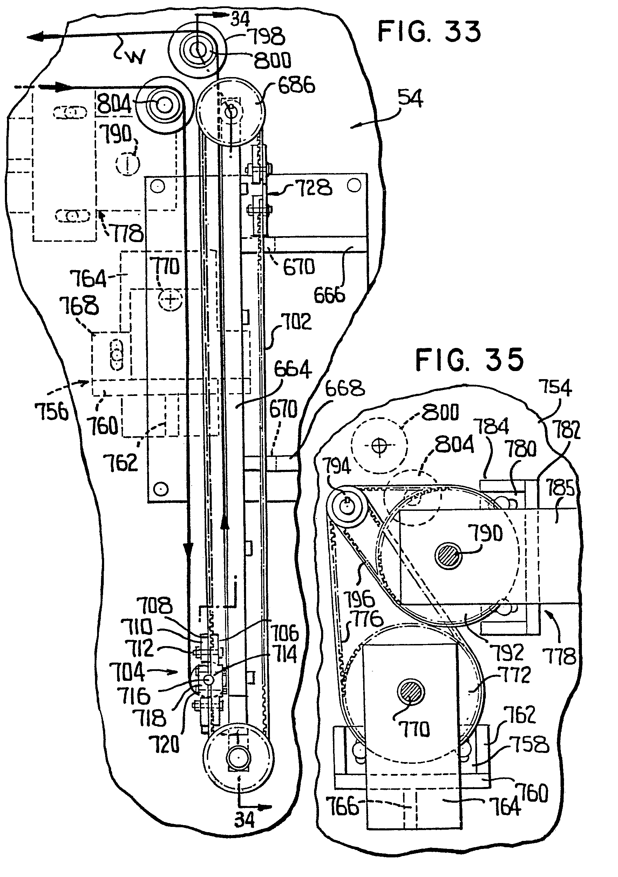

Referring now to Figures 33—35, it will be seen that the dancer roll assemblies are carried by a support frame assembly, generally identified by the numeral 660. The support frame assembly 660 is mounted on the right side of the machine wall 54.

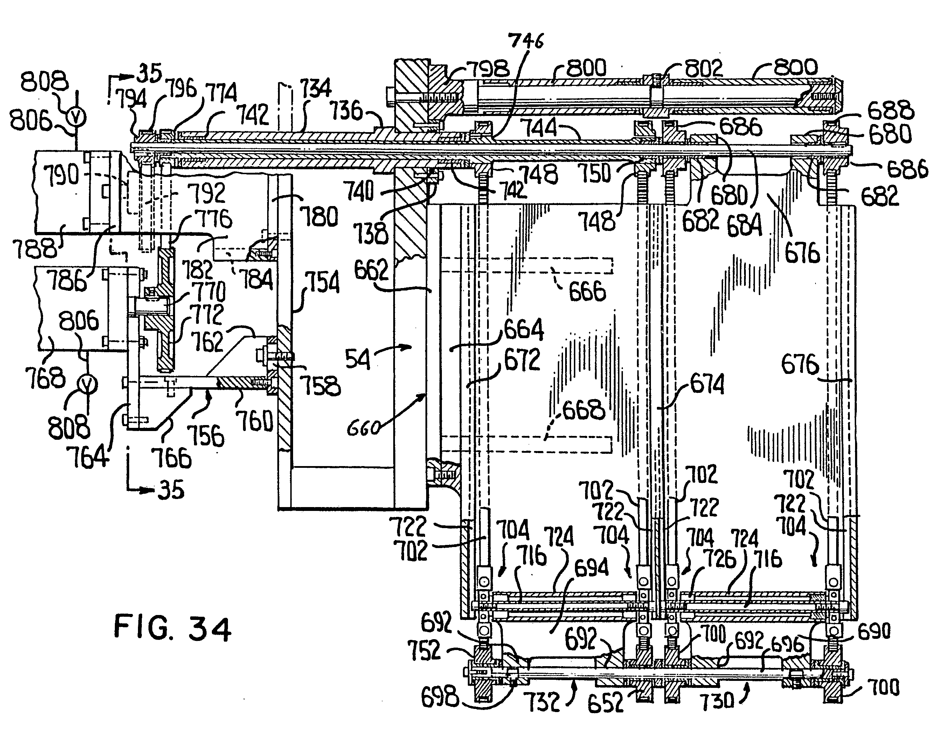

The support frame assembly 660 includes a mounting plate 662 which is disposed parallel to the wall 54 and is secured thereto in face to face engagement by suitable bolts. A main support plate 664 extends normal to the mounting plate 662 and is secured thereto by means of suitable bolts. The main support plate 664 is reinforced on the back side thereof, as viewed in Figure 34 by an upper brace plate 666 and a lower brace plate 668, as viewed in Figure 33. The brace plates 666 and 668 have notches 670 therein for the passage of belts which will be described in detail hereinafter.

The front face of the main support plate 664 has secured thereto bars 672, 674 and 676 which will be described in detail hereinafter. Remote from the wall 54, the plate 664 has projecting upwardly therefrom a shaft mounting portion 678 which terminates in a pair of upstanding arms 680. The arms 680 have bores therethrough and carry bushings 682 in which an upper shaft 684 is rotatably journaled. The shaft 684 carries a pair of sprockets 686 for timing belts with the sprockets 686 having side plates 688 to retain the timing belts thereon.

That part of the support plate 664 disposed remote from the wall 54 also has a depending portion 690 which includes a pair of depending legs 692. In a like manner, that portion of the support plate 664 disposed adjacent the wall 54 also has a depending lower portion 694 which has like legs 692 depending therefrom. The legs 692 have aligned bores passing therethrough and a single elongated lower shaft 696 extends through the legs 692 and is fixed therein by means of set screws 698 carried by remote ones of the legs 692.

A pair of sprockets 700 are rotatably journaled on the shaft 696 in vertical alignment with the sprockets 686. A timing belt 702 is entrained over each pair of the sprockets 686, 700.

With particular reference to the roller part of Figure 33, it will be seen that remote ends of the belts 702 are secured together by a coupling assembly, generally identified by the numeral 704. The coupling assembly 704 includes an elongated plate 706 which is provided at the opposite ends thereof with transverse grooves 708 which match the ribs on the belt 702. The ends of the belt 702 are assembled with the elongated member 706 and are clamped in place by means of clamp plates 710 which are fixedly secured in position by bolts 712.

A central portion of the elongated member 706 is thickened and has formed in one face thereof a shaft seat 714. An end portion of a dancer roll shaft 716 is seated in the seat and is clamped in place by means of a clamp plate 718 secured to the member 706 by bolts 720.

With reference to Figure 34, it will be seen that the guide plates 674 and 676 have grooves 722 in the opposed faces thereof and the dancer roll shaft 716 is of a length so as to be received in the grooves which function as guide channels. It is also to be noted that the dancer roll shaft 716 is hollow so as to be light in weight.

The dancer roll shaft 716 has mounted thereon for rotation a dancer roll 724 which is of a tubular construction and which is provided with bearing type plugs 726 in the opposite ends thereof.

Referring once again to Figure 33 with reference to the upper part thereof, it will be seen that each of the belts may be provided with a second coupling, generally identified by the numeral 728. This coupler will not be described in detail.

It is to be understood that the various components specifically described hereinabove form an outboard dancer roll assembly generally identified by the numeral 730. There is also an inboard dancer roll assembly identified by the numeral 732. The inboard dancer roll assembly, except for some minor details, is identical to the outboard dancer roll assembly.

With reference to the upper part of Figure 34, it will be seen that the wall 54 has a bearing tube 734 extending therethrough and that the bearing tube 734 is mounted on the wall 54 by means of a mounting flange 736. The bearing tube 734 has telescoped thereover on the opposite side of the wall 54 a cover 738 which is provided with a seal 740 to seal the opening through the wall 54.

The bearing tube of sleeve 734 is coaxial with the shaft 684 and is provided at the opposite ends thereof with bushings 742 in which there is rotatably journaled a second upper shaft 744. An intermediate part of the shaft 744, adjacent the right hand bushing 742 is in the form of a hub 746 on which there is mounted an upper sprocket 748 which corresponds to the sprocket 686. The right end of the shaft 744 carries a bushing 740 which rotatably is journaled to the shaft 744 on the shaft 684 adjacent the left hand sprocket 686. The shaft 744 carries a second upper sprocket 748 adjacent the left hand sprocket 686.

Referring now to the lower part of Figure 34, it will be seen that the lower shaft 696 has rotatably journaled thereon lower sprockets 752 which are vertically aligned with the upper sprockets 748 and correspond to the sprockets 700. Two additional belts 702 are entrained over the aligned sprockets 748, 752 with the belts being coupled together by like couplers 704. The pair of couplers 704 carry a second dancer roll shaft 716 on which there is mounted for rotation a second dancer roll 724. At this time it is to be noted that the opposed faces of the guide plates 672, 674 are provided with further of the guide grooves 722 and guidingly receive therein remote ends of the second dancer roll shaft 716.

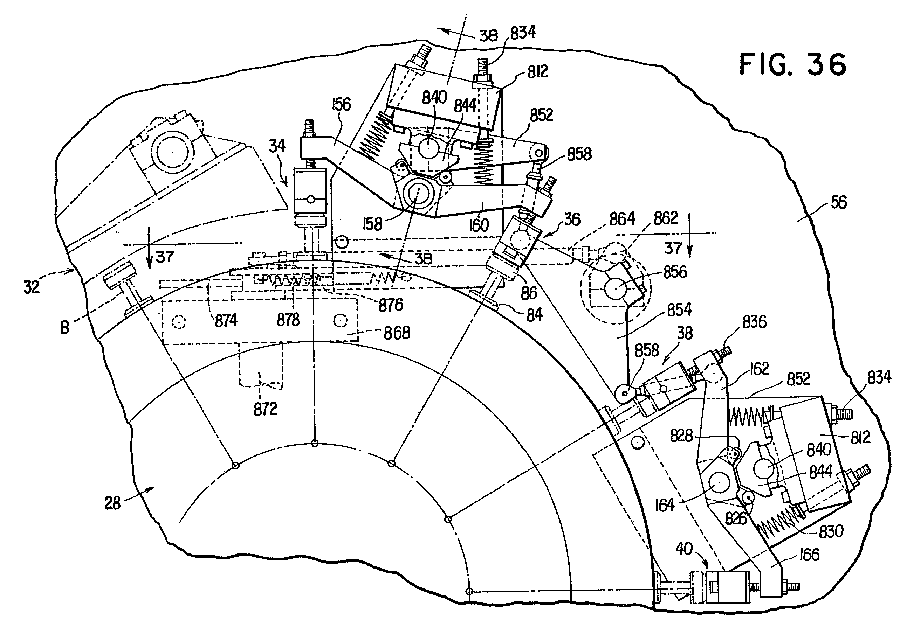

Referring now specifically to the upper left part of Figure 34 and to Figure 35, it will be seen that the machine includes a further support plate 754. The support plate 754 is spaced to the left of the wall and is generally parallel thereto. The plate 754 carries a support structure generally identified by the numeral 756 which includes a mounting plate 758 which is removably secured to the left face of the plate 754. The mounting plate 758 carries a horizontal plate 760 which is braced by a vertical brace 762. At the left end of the plate 760 is a vertical plate 764 which is braced by a diagonal plate 766. The plate 764 carries an air motor or actuator 768 which is provided with a shaft 770 having mounted thereon a sprocket 772. The sprocket 772 is aligned with a sprocket 774 carried by the left end of the upper shaft 744. The sprockets 772, 774 are connected together by a drive belt 776.

A further support assembly, generally identified by the numeral 778 is carried by the support plate 754. The support assembly 778 includes a mounting plate 780 which is secured to the left face of the plate 754 in face to face engagement. The plate 780 carries a plate 782 which is vertically disposed and is braced with respect to the plate 780 by a lower horizontal mounting plate 786 which carries a second air actuator or motor 788.

The air motor or actuator 788 has a shaft 790 on which there is mounted a drive sprocket 792. The drive sprocket 792 is in alignment with a sprocket 794 carried by the left end of the shaft 684 and is coupled thereto by means of a drive belt 796.

The wall 54 has projecting from the right side thereof in cantilever relation a pair of supports 798. On one of these supports 798 there is rotatably journaled a pair of axially spaced idler rolls 800, as is best shown in the upper part of Figure 34. These rolls are spaced by a spacer 802. The other cantilever support 798 carries a pair of idler rolls 804, as is best shown in the upper part of Figure 33. Twin webs W, one disposed behind the other, pass from a supply source disposed at the left of the idler rolls 804, over and around the idler rolls 804 and down in front of the dancer rolls 724. The webs then pass below the dancer rolls and up behind the dancer rolls to the right of the idler rolls 800 and then back to the left to a tube forming mechanism which intermittently engage the webs and draw the webs. When the web is drawn, part of the acceleration of the web is absorbed by the dancer rolls which are elevated, rotating the shafts 684, 744 against the resistance of the respective control motors. It is to be understood that the two webs may move independently of one another and that there is no need for the dancer rolls for the two webs to remain in synchronism although they have been so illustrated. The control motors 768 and 788 have coupled thereto a source of air pressure by means of lines 806 having incorporated therein pressure control valves 808. Thus the resistance of the air motors or actuators may be controlled by varying the air pressure. In this manner the torque applied to the shafts 684, 744 may be controlled.

The specific controls for the motors 768, 788 are not a part of this invention and are not specifically described here. It is to be understood, however, that these motors rotate in a drive direction only through a partial revolution so that after the associated dancer roll has moved vertically a prescribed distance, the motor is actuated to drive the respective upper shaft in the necessary direction to return the associated dancer roll to its lower starting position.

It will be readily apparent that the construction of the dancer rolls and the mounting therefor provide for a very light assembly which permits the dancer rolls to be actuated with a minimum of force, thereby not radically affecting the web tension. Accordingly, basically the web tension is therefore a function only of the air pressure directed to the control motors.

Referring now to Figures 36—40, it will be seen that in Figure 36 there is illustrated schematically the turret 28 and the series of bag supporting mandrels 84, 86 carried thereby. A tubular bag member B having a sealed outer end first passes the plow 32 so as to shape the bag bottom and then sequentially is indexed to be operated on by the heat sealer 34, the cooler 36, the heat sealer 38 and then the cooler 40 so as to form a completely sealed bottom.

Although in Figure 36 there are illustrated the means for forming only one bag, actually there are two rows of the mandrels 84, 86 which are simultaneously operated on. As a result, there are two each of the heat sealers 34 and 38, the coolers 36 and 40 and the support arms therefor.

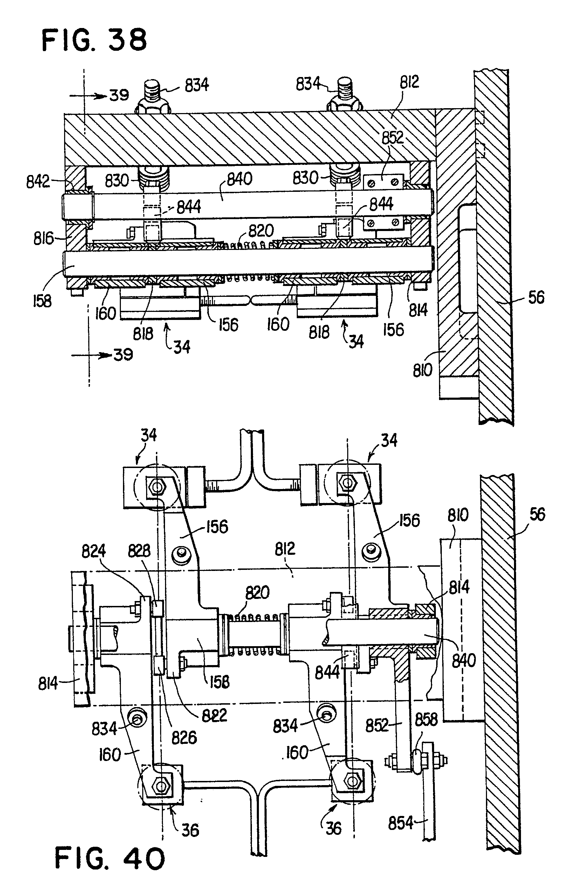

Referring specifically to Figures 38 and 40, it will be seen that the wall or plate 56 has suitably secured to the front face thereof a spacer block 810 which, in turn, has extending therefrom normal to the plane of the wall 56 a support plate 812. The support plate 812 has depending therefrom an inner support 814 and an outer support 816. The pivot shaft 158 is fixedly secured within and extends between the plates 814, 816, as is clearly shown in Figure 38.

The support arms 160 and 156 are mounted on the pivot shaft 158 for pivotal movement in spaced relation longitudinally of the pivot shaft with there being a spacer 818 disposed therebetween. Further, the two sets of support arms 156, 160 are spaced apart longitudinally of the pivot shaft 158 by a compression spring 820.

Referring now specifically to Figure 39, it will be seen that the support arms 156, 160 have extensions 822, 824 on the side of the pivot shaft 158 opposite from the major portions of the arms. The extensions 822, 824 carry cam followers 826, 828, respectively, which lie in a common plane with the spacer 818. This is clearly shown in Figure 40.

It will also be apparent from Figure 39 that each of the support arms 156, 160 is urged towards the center of the turret by a compression spring 830 which is adjustably compressed between the respective support arm and an adjustably mounted stop member 832 which is part of a bolt 834 which is threaded into the support bar 812. Further, it will be seen that the heat sealer 34 and the cooler 36 are adjustably carried by the ends of the respective support arms 156, 160 by support bolts 836 which are adjustable in the respective arms and which have a resilient connection 838 with the respective heat sealer and cooler.

While the heat sealers 34 and the coolers 36, as well as the heat sealers 38 and the coolers 40 are constantly resiliently urged to positions cooperative with the mandrels 86, in accordance with this invention there is provided a positioning mechanism for periodically moving the heat sealers and coolers away from the mandrels 86 during the time which the turret 28 is indexing. The positioning mechanism includes a positioning or drive shaft 840 which is located radially outwardly of the pivot shaft 158 and parallel thereto. The shaft 840, as is best shown in Figure 38, is rotatably journaled in bearings 842 carried by the supports 814, 816.

The shaft 840 has adjustably clamped thereto a pair of cams 844 which are aligned with the spacers 818 and the cam followers 826, 828. Each cam 844 is of a wedge shape and includes a neutral central portion 846 and two straight sloping portions 848 and 850 which are associated with the cam followers 826, 828, respectively.

Reference is now made to Figure 36 wherein it will be seen that there is a like positioning mechanism for the heat sealers 38 and coolers 40. Inasmuch as the positioning mechanism is identical with that described relative to the heat sealers 34 and the coolers 36, no further attempt will be made to describe the same and like reference numerals will be applied to like parts thereof.

The two positioning mechanisms are actuated in unison. To this end each of the shafts 840 is provided with a lever 852, the two levers extending in opposite directions and towards one another. The levers 852 are positioned by means of a double ended lever or crank 854 which is carried by a positioning or control shaft 856. The ends of the lever 854 are connected to the levers 852 by adjustable links 858.

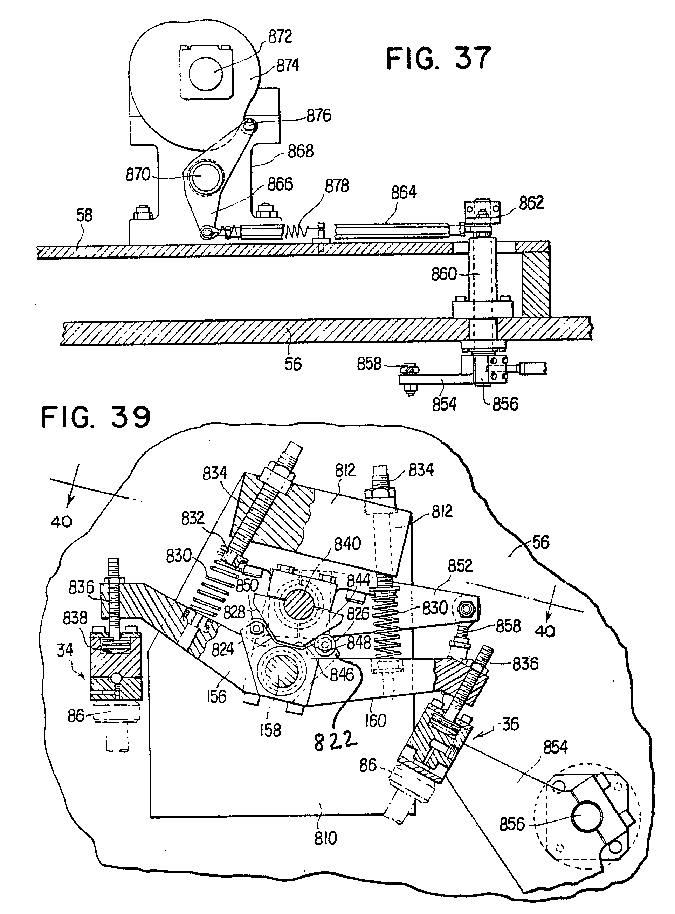

Referring now to Figure 37, it will be seen that the shaft 856 extends through the wall 56 and through the further wall 58 and is rotatably journaled in a bearing sleeve 860 secured to the rear of the wall 56. The rear end of the shaft 856 is provided with a fitting 862 to which there is connected a link 864 which, in turn, is connected to a bell crank 866.

The wall 58 has mounted thereon a horizontally projecting support 868 which carries a pivot shaft 870 for the bell crank 866. The support 868 also carries a vertical drive shaft 872 of the machine which carries a cam 874. The cam 874 is engaged by a cam follower 876 carried by the opposite end of the bell crank. The cam follower 876 is held against the cam 874 by a tension spring 878.

Referring to Figure 36 and assuming the cam 874 is rotating in a counterclockwise direction, it will be seen that as the double ended lever 854 is rotated in a clockwise direction, it will cause rotation of the two shafts 840 in a counterclockwise direction with the resultant pivoting of the cams 844 in that direction. The rotation of the cams 844 will serve to wedge the cam followers 826, 828 apart with the support arms 156, 162 pivoting in a clockwise direction to move the heat sealers 34, 38 away from the turret and the support arms 160, 166 in a counterclockwise direction to move the coolers 36, 40 away from the turret.

It will also be readily apparent that while the positioning mechanism and the drive therefor are very simple, the mechanisms are readily adjustable and can provide the desired synchronization of the positioning of the heat sealers and coolers relative to the mandrels 86 as the turret 28 is indexed.

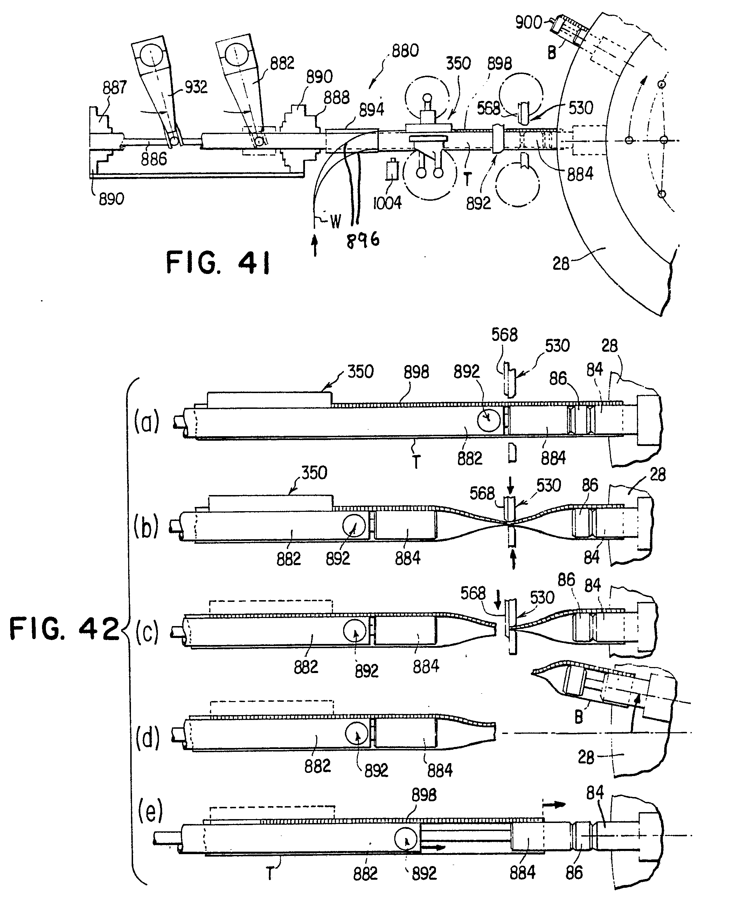

Referring now to Figure 41 in particular, it will be seen that the turret 28 of the machine is sequentially indexed so as to have an empty fixed mandrel 84 and an associated movable mandrel 86 positioned at the nine o'clock position for receiving a pouch B.

Each pouch is formed on and by a mandrel assembly which is generally identified by the numeral 880. Each mandrel assembly 880 includes a reciprocating mandrel 882 having at its forward end a mandrel extension 884 which is carried by a support rod 886. Each mandrel 882 is mounted for reciprocation within a pair of sleeve type supports 887 and 888 which are carried by horizontal supports 890 which extend forwardly from the main wall 54 of the machine.

The mandrel 882 has mounted on for reciprocation therewith a gripper, generally identified by the numeral 892. The gripper 892, as will be described hereinafter, is closed when the mandrel 882 is advanced and opened when the mandrel retracts.

A web W is supplied to the mandrel 882 through a suitable combination former and guide 894 so that the web is wrapped around the mandrel 882 in tube form with two parallel upstanding edges 896 initially in facing unsealed relation. The edges 896 are moved into alignment with and through a side sealer 350 so as to form on the resultant tube T a side seam 898.

After the leading portion of the tube T is fed over the movable mandrel 86 and onto the fixed mandrel 84, the tube is provided with a horizontally disposed transverse bottom seam 900 by the end sealer 530 after which it is cut from the remainder of the tube by a cutter 568.

Reference is now made to Figure 42a wherein it is shown that the mandrel 882 and the mandrel extension 884 have advanced with the mandrel extension 884 engaging the movable mandrel 86 and the tube T is positioned for the formation at one end thereof of a pouch B. At this time the side sealer 350 is closed to additionally seal together further portions of the edge 896 to extend the side seam 898. At the same time, the gripper 892 is opened.

Next, the mandrel 882 and the mandrel extension 884 retract, as is shown in Figure 42b. The gripper 892 is now closed to fix the tube T on the mandrel 882 and the end sealer 530 is actuated to form the bottom seal 900.

With reference to Figure 42c, it will be seen that the side sealer 350 is opened and the cutter 568 is actuated to sever the pouch B from the forward part of the tube T.

Referring now to Figure 42d, it will be seen that the turret 28 is indexed. When the mandrel 86 and the fixed mandrel 84 is in the nine o'clock position, the mandrel extension 884 is first advanced to open the previously closed end of the tube T, followed by the advance of the mandrel 882 with the tube T gripped thereto by the gripper 892 to advance the tube to the position of Figure 42a where the cycle is repeated.

It is to be understood that in accordance with this invention there are two mandrels 882 so as to simultaneously feed two pouches B to the turret 28.

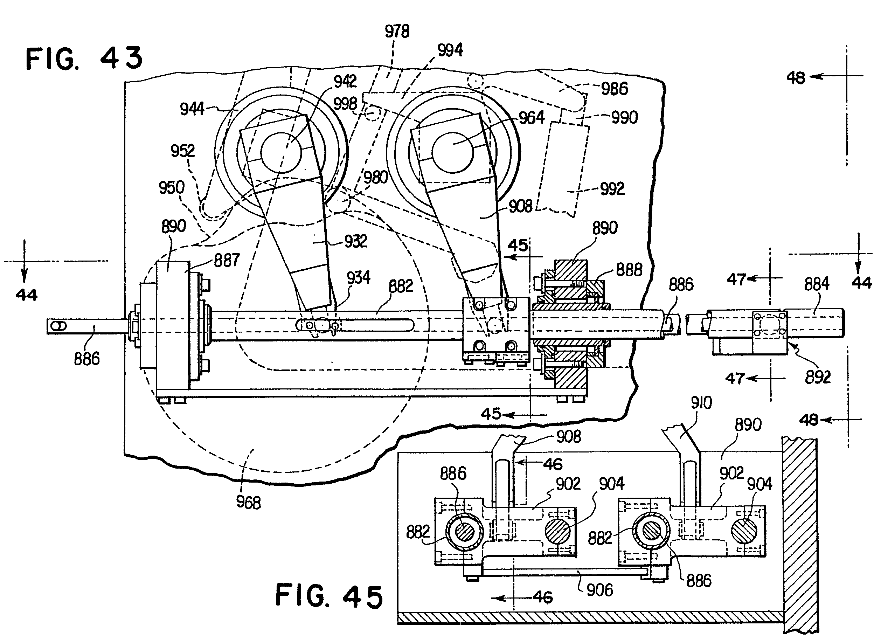

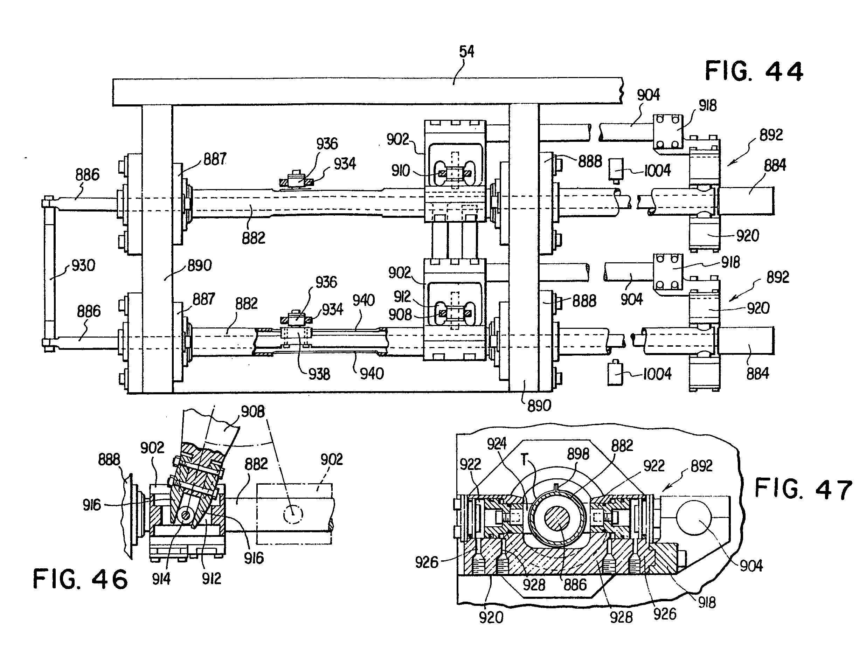

Reference is now made to Figures 43 and 44 wherein it will be seen that to the left of the mandrel guide sleeve 888 is clamped to the mandrel 882 a feed member 902 which carries a support rod 904 which passes through the adjacent support member 918 and carries at the forward end thereof the tube gripper 892. The feed members for the two mandrels 882 are in side-by-side relation and are interconnected by a sliding guide assembly 906 which prevents relative rotation of the tubes 882.

The feed members 902 are engaged by separate feed arms 908 and 910 which are mounted for oscillatory movement in a manner to be described hereinafter. As is best shown in Figure 46, each feed member 902 has a central opening 912 therethrough in which there is positioned a follower 914. The follower 914 is positioned between two fingers 916 at the end of a respective feed arm, the feed arm 908 being illustrated.

Referring now to Figure 47, it will be seen that one of the grippers 892 is illustrated. The gripper 892 includes a support bracket 918 which carries a generally U-shaped support 920 which has received in the central portion thereof the associated mandrel 882. The support 920 carries diametrically opposite piston and cylinder assemblies 922, each of which carries a gripper member 924 for gripping the tube T on the mandrel 882 in diametrically opposite position for advancement with the advancing mandrel 882.

It will be seen that the piston and cylinder arrangements are of the double acting type and have two separate fluid passages 926, 928 coupled thereto.

It will be seen that the support rods 886 for the mandrel extensions 884 extend through the left ends of the mandrels 882 and are connected together for movement in unison by a connector 930. However, while the mandrel extensions 884 move in unison, they are separately reciprocated by drive arms 932 which have bifurcated ends 934 engaged over followers 936. Each follower 936 is carried by a support 938 mounted on an intermediate portion of the support rod 886. The support 938 extends through a longitudinal slot 940 in the mandrel 882, there being a like slot 940 on the diametrically opposite side of the mandrel 882.

The drive arms 932 are mounted on a single control shaft 942 which is rotatably journaled in a support bearing 944 carried by the wall 54.

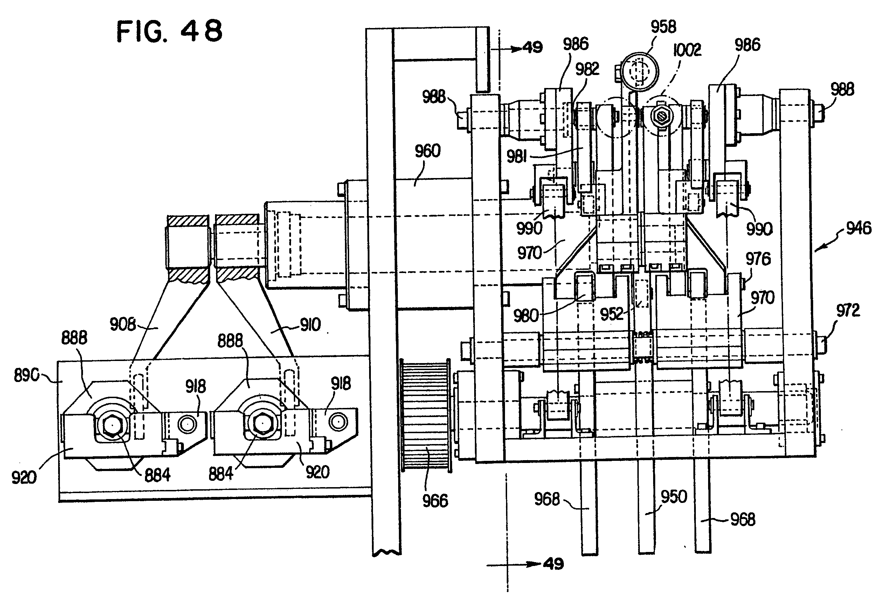

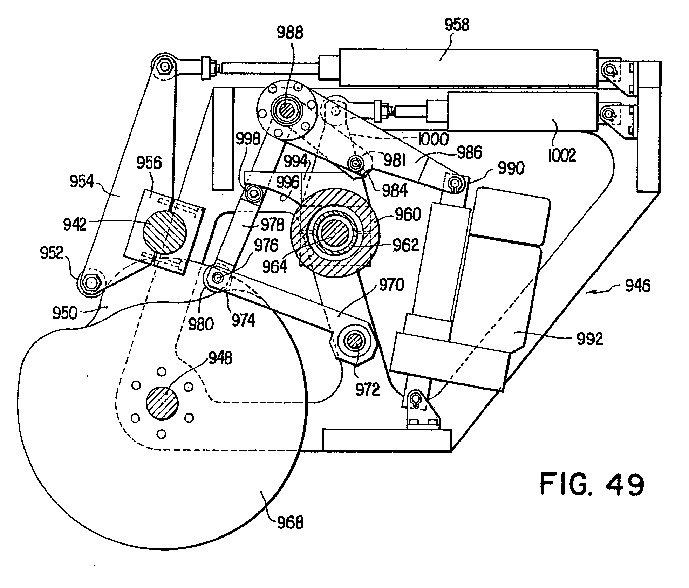

With reference to Figure 49, it will be seen that there is illustrated a frame assembly 946 which, as is best shown in Figure 48, is secured to the opposite surface of the wall 54. The frame assembly 946 carries a drive shaft 948 on which there is mounted an intermediate cam 950. The cam 950 engages a cam follower 952 carried by a lever 954 which has an intermediate portion thereof secured to the shaft 942 by a clamp 956. The opposite end of the lever 954 has coupled thereto a fluid cylinder 958 carried by the frame 946 for constantly urging the cam follower 952 against the cam 950 under controlled pressure.

There is illustrated carried by the wall 54 and the frame 946 a bearing assembly 960 which supports for oscillation an outer shaft 962 and an inner shaft 964 which carry the feed arms 908 and 910, respectively. The mounting of the feed arms 908, 910 on these two shafts is best shown in Figure 48.

Each of the shafts 962 and 964 is oscillated in the same manner. Accordingly, the drive means for only the shaft 962 will be described in detail here.

The drive shaft 948, which is shown in Figure 48 as being driven from other mechanism of the machine by way of a drive sprocket 966 carries two outside cams 968. There is mounted adjacent each of the cams 968 a linkage which includes a first lever 970 pivotally mounted on the frame 946 by means of a pivot pin 972. The opposite end of the lever 970 is bifurcated as at 974 and carries a pivot pin 976. The pivot pin 976 carries a bifurcated end of a second lever 978 which has mounted within its bifurcations and on the pivot pin 976 a cam follower 980 which engages the cam 968.

The opposite end of the second lever 978 is pivotally connected to a terminal lever 981 by a pivot pin 982 (Fig. 48). The terminal lever 981 has a terminal pivot 984 which is carried by an intermediate portion of a terminal lever 986. The terminal lever 986 has one end thereof pivotally mounted on a fixed pivot 988 while the opposite end thereof is pivotally connected to an adjustable support 990. The support 990 is selectively extensible or rectractable and is preferably in the form of a motor driven screw mounted assembly although any type of positioning mechanism 992 may be provided for the support 990.

The shaft 962 carries a positioning lever 994 which is provided with a cam surface 996 engaged with a cam follower 998 carried by an intermediate portion of the second lever 978.

A lever 1000 is also carried by the shaft 962 and has a free end engaged by a piston rod of a fluid cylinder 1002 which acts to constantly urge the cam surface 996 against the cam follower 998 and in a similar manner to urge the cam follower 980 with the cam 968 under pressure.

As stated above, there is a second cam 968 on the opposite side of the intermediate cam 950 for oscillating the shaft 964. Like linkage and adjusting mechanism connects the second of the cams 968 to the shaft 964.

It is to be understood that the cams 950 and 968 serve to normally reciprocate the mandrels 882 and mandrel extension 884 in sequence to produce the advance and retraction thereof so as to effect the feeding of the tube T in the manner shown in Figures 42a—42e. However, associated with each of the mandrels 882 is a detector 1004 for detecting the position of indicia printed on the web W. It is to be understood that the indicia on each of the pouches B is to be aligned with the pouch. The detectors 1004 may be in the form of electric eyes or any other type of detectors. Further, the detectors 1004 are coupled in a customary manner to the positioning mechanisms 992 so as to advance or retract the support 990 to advance the respective mandrel 882 either a lesser or greater amount so as to assure the desired indicia orientation.

## Claims

1. An apparatus for shaping a sealed tube bottom into a flat bag bottom and delivering the shaped bag to take-away means, comprising a turret (28); means mounting said turret (28) for indexing movement about a fixed generally horizontal axis, said turret (28) having a plurality of stations and each of said stations having a mandrel assembly (26) which includes an inner mandrel (84), an outer mandrel (86), and a plunger (88) for each outer mandrel (86), the plunger extending into the interior of said turret (28) through said inner mandrel (84); cam means (94) cooperating with an inner end of said plunger (88) for positioning said outer mandrel (86) relative to said inner mandrel (84), and sealing means (34, 38) for heat sealing triangular portions (30) of a sealed tube bottom to the adjacent flat bottom portion thereof to form the tube into a flat bottom bag; characterised in that the apparatus comprises orienting means (42) for engaging the bag while on said mandrel assembly (26) and rotating the bag about the axis of said mandrel assembly (26).

2. Apparatus according to Claim 1 wherein each mandrel assembly (26) includes a fixed mandrel portion (78) adjacent said inner mandrel (84), and clamp means (102) being cooperable with said fixed mandrel portion (78).

3. Apparatus according to Claim 2 wherein said clamp means (102) includes at least one clamp arm (112), a pivot (138) mounted centrally of said clamp arm (112) mounting said clamp arm (112) in off centre relation, spring means (148) engaging one end portion of said clamp arm (112) for urging said clamp surface (136) towards said fixed mandrel portion (78), and actuator means (106) engaging the opposite end of said clamp arm (112) for selectively overcoming the urging of said spring means (148).

4. Apparatus according to any of claims 1 to 3 wherein said apparatus includes a main support (54) in the form of a vertical wall separating said machine into a sanitary product handling half and a drive machinery half.

5. Apparatus according to any of the preceding claims together with a heat sealer (270) for closing bags and the like, characterised in that said heat sealer (270) comprises a pair of parallel members (284, 286), means (276, 278) mounting said parallel members (284, 286) for separate axial movement, said parallel members (284, 286) having spaced adjacent ends facing in the same direction, a first bracket (288) carried by one of said parallel members (284) and having a first heat sealing member (294) thereon facing in the same direction as said parallel member ends, a second bracket (296) carried by the other of said parallel members (286) and having a second heat sealing member (302) thereon facing in the opposite direction and opposing said first heat sealing member (294), coupling means (310) coupling said parallel members together for movement in unison and in opposite directions, pressure means (316) reacting on one of said parallel members (286) urging said heat sealing members (294, 302) under a controlled force, mechanical means (334) for reacting on the other of said parallel members (284) to urge said heat sealing members (294, 302) apart against the resistance of said pressure means (312), and drive means (340) for actuating said mechanical means (334).

6. Apparatus according to Claim 5 when appendant to claim 4 wherein said heat sealer (270) is mounted on said main support wall with said parallel members (284, 286) extending through said wall (54).

7. Apparatus according to any of claims 1 to 6 comprising a heat sealer having first (366) and second (400) support members, mounting means (352, 384) mounting said support members (366, 400) in parallel relation for axial movement, opposed heat sealing members (372, 410) carried by said support members (366, 400), drive means (428) interconnecting said support members (366, 400) for axial movement in unison; and said drive means (428) including fluid pressure means (444) urging said support members (366, 400) to positions wherein said heat sealing members (372, 410) are in closed operative positions, and mechanical means (448) operable to overcome said fluid pressure means (444) and to move said support members (366, 400) to positions separating said heat sealing members (372, 400) for receiving an article to be heat sealed therebetween.

8. Apparatus in accordance with claim 7 wherein another heat sealing member (372A) is carried by an intermediate portion of said first support member (366), a third support member is (402) mounted immediately adjacent said second support member (400), and a further heat sealing member (410A) is carried by said third support member (402) in opposed relation to said another heat sealing member (372A) for cooperation therewith.

9. Apparatus according to any of claims 1 to 8 having a web pay-out assembly comprising a hub assembly (476) having a hub (478) for receiving a spool having a tubular core, and wherein said hub (478) is hollow to define an interior chamber (480) and has radial bores (486) extending therethrough in circumferentially spaced relation, spool anchoring pins (488) in said bores (486) with the inner ends of the pins extending into said hub chamber (480), resilient means (516) resisting radial outward movement of said pins (488), and cam means (506, 508) within said hub chamber (480) and engaging said pin (488) inner ends for forcing outer ends (510) of said pins (488) outwardly beyond said hub (478) to engage a spool case.

10. Apparatus according to claim 9 wherein there is a combined partition and support wall (54), a spacer (468) secured to one surface of said wall (54) in surrounding relation relative to an opening through said wall (54), a control unit (460) having a mounting flange (464) carried by said spacer (468) in sealed relation (474) thereto and to said wall (54), said control unit (460) having a control shaft (462), and means releaseably securing said hub (478) to said control shaft (462) for rotation therewith.

11. Apparatus according to any of claims 1 to 8 having a web pay-out assembly comprising a hub assembly (476) having a hub (478) for receiving a spool having a tubular case, a combined partition and support wall (54), a spacer (468) secured to one surface of said wall (54) in surrounding relation relative to an opening through said wall (54), a control unit (460) having a mounting flange (464) carried by said spacer (468) in sealed relation (474) thereto and to said wall (54), said control unit (460) having a control shaft (462), and means releasably securing said hub (478) to said control shaft (462) for rotation therewith.

12. Apparatus according to claim 11 wherein two said assemblies (476) are provided with the hubs (478) thereof being spaced differently from said wall (54), and said spacers (468, 526) of said assemblies (476) being of different lengths to facilitate said differential spacing.

13. Apparatus according to any of claims 1 to 12 comprising a combined heat sealer and cut-off device (530) for cutting a continuous tube into sections of preselected length and closing one end of each tube section, said device (530) comprising a support bracket (532), a pivot (540) carried by said support bracket (532), a pair of cooperating scissor blade like members (560, 570) pivotally mounted on said pivot (540) and carrying cooperating heat sealing members (568, 573), a blade element (574) pivotally mounted on said pivot (540) and cooperating with said heat sealing members (568, 573) to sever the tube immediately adjacent a heat sealed pinched off portion of the tube to define a tube portion with a closed end and an open end, and actuating means connected to blade like members (560, 570) and said blade element (574) for pivoting the same in timed relation.

14. Apparatus according to claim 13 wherein said bracket (532) is carried by a machine wall (54), said actuating means includes guide sleeves (580, 606) carried by said machine wall (54), plungers (592, 608) mounted in said guide sleeves (580, 606) for reciprocating axial movement, said plungers (592, 608) including a separate plunger (600, 614) for each of said blade like members (560, 570) and said blade element (574), linkage (596, 612, 618) connecting said plungers (592, 600, 608, 614) to respective ones of said blade like members (560, 570) and said blade element (574), and drive means (624) coupled to said plungers (592, 600, 608, 614).

15. Apparatus according to any of claims 1 to 14 comprising a dancer roll arrangement for use with a web feeding device, wherein said arrangement comprises upper (684) and lower shafts (696), axially spaced sprockets (686, 700) on said shafts (684, 696) in vertically aligned relation, endless belts (702) entrained over said aligned sprockets (686, 700), a dancer roll shaft (716) extending between and secured to said belts (702) in supported relation parallel to said upper (684) and lower shaft (696), a dancer roll (724) carried by said dancer roll shaft (716) for controlled vertical movement and control means (788) coupled to one of said upper (684) and lower shafts (696) for controlling the rotation thereof.

16. Apparatus according to claim 15 wherein two of said upper (684, 744) and lower shafter (698) are provided in side-by-side relation, and there are two of said dancer rolls (724) separably mounted and controlled, one shaft (744) of said second set of shafts being coupled to another control means (768), and said one shaft (744) being coaxial and including inner and outer shafts (740, 746).

17. Apparatus according to any of claims 1 to 16 having a mechanism comprising a pair of pivotally mounted arms (156, 160), and a drive mechanism for sequentially moving said arms (156, 160) operative and inoperative positions, said drive mechanism including each of said arms (156, 160) having a control portion (822, 824), a drive shaft (840), and a cam (844) carried by said drive shaft (840), and said cam (844) having separate segments (826, 828) cooperating with said control portions (822, 824).

18. Apparatus according to claim 17 wherein one (156) of said arms carries a heating element (34) of said first-mentioned sealing means and the other (160) of said arms carries a cooling element (36), and wherein said stations of said turret (28) are aligned with said heating element (34) and said cooling element (36).

19. Apparatus according to any of claims 1 to 18 having a pouch forming apparatus for forming pouches from a printed web and comprising a tube forming mandrel assembly (880) comprising a reciprocating mandrel (882), clamp means (892) associated with said mandrel (882) for periodically clamping a tube portion to said mandrel (882) for movement therewith to advance an associated tube (T), drive means (932) for repeatedly advancing and retracting said mandrel, and means for varying the advance stroke of said mandrel (882) in response to actuation of said drive means to maintain registration of printing on said web with formed pouches.

**Patentansprüche**

1. Vorrichtung zur Umformung des Unterteils eines verschweißten Schlauches in die flache Unterseite eines Beutels und zur Abgabe des geformten Beutels an Einrichtungen zum Abtransport desselben, enthaltend einen Drehkopf (28); Mittel, die den Drehkopf (28) schrittweise um eine festliegende, im allgemeinen horizontale Achse drehen, wobei der Drehkopf (28) mehrere Stationen aufweist, von denen jede eine Dornanordnung (26) enthält, die einen inneren Dorn (84), einen äußeren Dorn (86), und für jeden äußeren Dorn einen Stößel (88) aufweist, wobei sich der Stößel in das Innere des Drehkopfes (28) durch den inneren Dorn (84) hindurch erstreckt; eine Nockeneinrichtung (94), die mit dem inneren Ende des Stößels (88) zum Verstellen des äußeren Dorns (86) gegenüber dem inneren Dorn (84) zusammenwirkt, und Verschweiß-Einrichtungen (34, 38) zum Heißversiegeln dreieckförmiger Teilbereiche (30) eines Unterteils eines verschweißten Schlauches mit dem benachbarten, den flachen Unterteil bildenden Teilbereich desselben zur Umformung des Schlauches in einen Beutel mit einem flachen Unterteil, gekennzeichnet dadurch, daß die Vorrichtung Orientierungsmittel (42) aufweist, die den Beutel, während er sich auf der Dornanordnung (26) befindet, aufnehmen und um die Achse der Dornanordnung drehen.

2. Vorrichtung nach Anspruch 1, bei der jede Dornanordnung (26) einen festen Dornbereich (78) unmittelbar an den inneren Dorn (84) anschließend, sowie Klemmvorrichtungen (102), die mit dem festen Dornbereich (78) zusammenwirken, enthält.

3. Vorrichtung nach Anspruch 2, bei der Klemmvorrichtungen (102) mindestens einen Klemmarm (112) und einen mittig an diesem angeordneten Zapfen (138) aufweisen, der den Klemmarm (112) in außerhalb der Mitte liegender Stellung aufnimmt, und bei der ferner Federungsmittel (148) vorgesehen sind, die ein Ende des Klemmarms (112) aufnehmen und die genannte Klemmfläche (136) gegen den genannten festen Dornbereich (78) drücken, und ferner Betätigungseinrichtungen (106) vorgesehen sind, die das entgegengesetzte Ende des genannten Klemmarms (112) aufnehmen, um selektiv den Druck der Federungsmittel (148) zu überwinden.

4. Vorrichtung nach einem der Ansprüche 1 bis 3, bei der die Vorrichtung eine Haupt-Stütze (54), die die Form einer vertikalen Wand hat, aufweist, die die Vorrichtung in eine Hälfte zur Handhabung von Sanitärprodukten und in eine Hälfte mit den Antriebsmaschinen aufteilt.

5. Vorrichtung nach einem der vorhergehenden Ansprüche, mit einem Heißversiegler (270) zum Verschließen von Beuteln und ähnlichem, dadurch gekennzeichnet, daß der Heißversiegler (270) ein Paar paralleler·Teile (284, 286), sowie Einrichtungen (276, 278) zur Befestigung derselben derart aufweist, daß eine getrennte axiale Bewegung derselben möglich ist, wobei die parallelen Teile (284, 286) im Abstand voneinander angeordnete, aneinander angrenzende Enden, die in dieselbe Richtung weisen, aufweisen, sowie ferner mit einer ersten Klammer (288), die von einem der parallelen Teile (284) gehalten wird und auf der ein erster Heißversiegelungskörper (294) angebracht ist, der in dieselbe Richtung wie die Enden der parallelen Teile weist, ferner mit einer zweiten Klammer (296), die von dem anderen der parallelen Teile (286) gehalten wird, und auf der ein zweiter Heißversiegelungskörper (302) angebracht ist, der in die entgegengesetzte Richtung weist und gegenüber dem ersten Heißversiegelungskörper (294) angebracht ist, sowie ferner mit Kupplungsmitteln (310), die die parallelen Teile derart miteinander verbinden, daß diese sich einheitlich, jedoch gegenläufig bewegen, ferner mit Druckvorrichtungen (316), die in Reaktion auf einem (286) der parallelen Teile die Heißversiegelungskörper (294, 302) mit kontrollierter Kraft andrücken, sowie ferner mit mechanischen Vorrichtungen (334), die in Reaktion auf den anderen der parallelen Teile (284) die Heißversiegelungskörper (294, 302) gegen den Widerstand der Druckvorrichtungen (316) auseinanderdrücken, und ferner mit Antriebsvorrichtungen (340), die die mechanischen Vorrichtungen betätigen.

6. Vorrichtung nach Anspruch 5, sofern sie gemäß Anspruch 4 ausgebildet ist, bei der der genannte Heißversiegler (270) an der zentralen Befestigungswand angeordnet ist und sich parallele Teile (284, 286) durch die Wand (54) hindurch erstrecken.

7. Vorrichtung nach einem der Ansprüche 1 bis 6, enthaltend einen Heißversiegler, der erste (366) und zweite (400) Stützteile aufweist, sowie ferner Befestigungseinrichtungen (352, 384), die die Stützteile (366, 400) zur axialen Bewegung parallel zueinander führen, einander gegenüberliegende Heißversiegelungsteile (372, 410), die von den Stützteilen (366, 400) getragen werden, ferner Antriebsvorrichtungen (428), die die Stützteile (366, 400) derart miteinander verbinden, daß sie die axiale Bewegung einheitlich durchführen; wobei ferner die Antriebsvorrichtungen (428) Druckflüssigkeitseinheiten (444) enthalten, die die genannten Stützteile (366, 400) in Stellungen drücken, in denen sich die genannten Heißversiegelungskörper (372, 410) in geschlossener Betriebsstellung befinden, sowie ferner mechaniche Druckvorrichtungen (488), die bei Betätigung gegen die Wirkung der Druckflüssigkeitseinheiten (444) die genannten Stützteile (366, 400) in Stellungen bringen, in denen die Heißversiegelungskörper (372, 400) voneinander getrennt sind, so daß ein Artikel, der zwischen ihnen heißgesiegelt werden soll, aufgenommen werden kann.

8. Vorrichtung nach Anspruch 7, wobei ein weiterer Heißversiegelungskörper (372A) von einem Zwischenbereich des ersten Stützteils (366) getragen wird, sowie ferner ein dritter Stützeil (402) unmittelbar benachbart zum zweiten Stützteil (400) angebracht ist, und ein weiterer Heißversiegelungskörper (410A) von dem dritten Stützteil (402) derart getragen wird, daß er dem genannten weiteren Heißversiegelungskörper (372A) gegenüberliegt und mit diesem zusammenwirkt.

9. Vorrichtung nach einem der Ansprüche 1 bis 8, ausgestattet mit einer Abgabeeinrichtung für flächige Materialbahnen, enthaltend eine Nabenanordnung (476) mit einer Nabe (478), die eine Spule mit einem röhrenförmigen Kern aufnimmt, wobei die Nabe (487) hohl ist und somit eine innere Kammer (480) bildet, die radiale Bohrungen (486) aufweist, die sich durch sie hindurch erstrecken und entlang des Umfangs im Abstand voneinander angeordnet sind, sowie ferner mit Spulenverankerungsstiften (488), die in den Bohrungen (486) angeordnet sind, wobei deren innere Enden in die genannte Nabenkammer (480) hineinragen, und ferner elastische Mittel (516) vorgesehen sind, die der Bewegung der genannten Stifte (488) in radialer Richtung nach außen entgegenwirken, sowie ferner Einrichtungen (506, 508), die in der genannten Nabenkammer (480) angeordnet sind und auf die inneren Enden der Stifte (488) so einwirken, daß die äußeren Enden (510) der Stifte (488) aus der Nabe (478) herausgedrückt werden, um den Spulenkörper zu halten.

10. Vorrichtung nach Anspruch 9, bei der eine kombinierte Trenn- und Stützwand (54) vorgesehen ist, ferner ein Abstandshalter (468), der auf einer Seite der Wand und eine Öffnung durch die Wand (54) umgebend angeordnet ist, sowie ein Steuereinheit einem Befestigungsflansch (464), der von dem Abstandshalter derart getragen wird, daß er diesem gegenüber und der genannten Wand (54) gegenüber abgedichtet (474) ist, wobei die Steuereinheit (460) eine Steuerwelle (462) enthält, und Vorrichtungen, um die Nabe (478) lösbar mit der Steuerwelle (462) derart zu verbinden, daß sie sich gemeinsam mit dieser dreht.

11. Vorrichtung nach einem der Ansprüche 1 bis 8, ausgestattet mit einer Abgabeeinrichtung für flächige Materialbahnen, enthaltend eine Nabenanordnung (476) mit einer Nabe (478) zur Aufnahme einer Spule mit einem röhrenförmigen Gehäuse, sowie eine kombinierte Trenn- und Stützwand (54), sowie ferner einen Abstandshalter, der auf einer Seite der Wand (54) eine darin vorgesehene Öffnung umgebend angeordnet ist, sowie eine Steuereinheit (460) mit einem Befestigungsflansch (464), der von dem Abstandshalter (468) derart getragen wird, daß er diesem gegenüber und der genannten Wand gegenüber abgedichtet (474) ist, wobei die Steuereinheit (460) eine Steuerwelle (462) enthält, und Vorrichtungen, um die Nabe (478) lösbar mit der Steuerwelle (462) derart zu verbinden, daß sie sich gemeinsam mit dieser dreht.

12. Vorrichtung nach Anspruch 11, bei der zwei derartige Anordnungen (476) vorgesehen sind, wobei die Naben (478) verschiedenen Abstand haben und die Abstandshalter (468, 526) der Nabenanordnungen (476) verschiedene Längen besitzen, um die unterschiedliche Abstandsausbildung zu erleichtern.

13. Vorrichtung nach einem der Ansprüche 1 bis 12, enthaltend eine kombinierte Heißversiegelungs- und Abschneidevorrichtung (530), die einen endlosen Schlauch in Abschnitte vorgewählter Länge schneidet und ein Ende jedes Abschnitts schließt, wobei die genannte Vorrichtung (530) eine Stützklammer (532), einen von dieser getragenen Drehzapfen (540) sowie ein Paar zusammenwirkender scherenblattähnlicher Teile (560, 570) aufweist, die an dem genanten Drehzapfen angelenkt sind und zusammenwirkende Heißversiegelungskörper (568, 573) tragen und die ferner ein Schneidenelement (574) aufweist, das drehbar auf dem genannten Drehzapfen (540) angelenkt ist und derart mit den Heißversiegelungskörpern (568, 573) zusammenwirkt, daß der Schlauch unmittelbar angrenzend an den heiß verschweißten abgekniffenen Teilbereich des Schlauches abgetrennt wird, so daß sich ein Schlauchabschnitt mit einem offenen und einem geschlos-senen Ende ergibt, sowie Betätigungsvorrich-tungen, die mit schneidenähnlichen Teilen (560, 570) und dem Schneidenelement (574) derart verbunden sind, daß sich diese in bestimmter zeitlicher Abstimmung drehen.

14. Vorrichtung nach Anspruch 13, bei der die Klammer (532) won einer Maschinenwand (54) gehalten wird und die Betätigungs-vorrichtungen Führungshülsen (580, 606) auf-weisen, die an der Maschinenwand angeordnet sind, sowie ferner in den Fuhrungshülsen (580, 606) angeordnete Stößel (592, 608), die sich in axialer Richtung hin und her bewegen, wobei die genannten Stößel (592, 608) einen separaten Stößel (600, 614) für jedes schneidenähnliche Teil (560, 570) und das Schneidenelement (574) aufweisen, sowie ferner ein Verbindungsgestänge (596, 612, 618), das die Stößel (592, 600, 608, 614) jeweils mit den entsprechenden schneidenähnlichen Teilen (560, 570) bzw. dem Schneiden-element (574) verbindet, und Antriebsvorrich-tungen (624), die mit den Stößeln (592, 600, 608, 614) verbunden sind.

15. Vorrichtung nach einem der Ansprüche 1 bis 14, enthaltend eine Springrollenanordnung zur Verwendung mit einer Abgabeeinrichtung für flächige Materialbahnen, bei der die genannte Anordnung obere (684) und untere Wellen (696) sowie ferner axial im Abstand voneinander und vertikal miteinander ausgerichtet, auf der Welle angeordnete Sprossenräder (686, 700) aufweist, wobei Endlosriemen (702) über die ausgerichteten Zahnräder (686, 700) gespannt sind und eine Springrollenwelle (716) zwischen den Riemen (702) angeordnet und an ihnen befestigt ist, wobei die Abstützung parallel zur oberen (684) und unteren Welle (696) erfolgt und ferner eine Springrolle (724) von der Springrollenwelle (716) zur kontrollierten vertikalen Bewegung getragen wird und Steuervorrichtungen (788) zur Steuerung der Drehbewegung derselben mit einer der oberen (684) und unteren Wellen (696) gekoppelt sind.

16. Vorrichtung nach Anspruch 15, bei der zwei obere (684, 744) und untere Wellen (698) nebeneinander angebracht sind, und zwei der genannten Springrollen (724) separat montiert und gesteuert vorgesehen sind, wobei eine Welle (744) der zweiten Gruppe von Wellen zur anderen mittels Steuereinrichtungen (768) gekoppelt ist, wobei die genannte erste Welle (744) koaxial ausgebildet ist und innere und äußere Wellen (740, 746) aufweist.

17. Vorrichtung nach einem der Ansprüche 1 bis 16 mit einem Mechnismus, der ein Paar drehbar montierter Arme (156, 160) aufweist, sowie einen Antriebsmechanismum, um nacheinander die Arme (156, 160) in Arbeits- und Ruhepositionen zu bringen, wobei der genannte Antriebsmechanismus einschließlich der genannten Arme (156, 160) mit einem Steuerbereich (822, 824) versehen ist, und ferner eine Antribeswelle (840) und eine von der Antriebswelle (840) getragene Nocke (844) vorgesehen sind, wobei die Nocke (844) separate Segmente (826, 828) enthält, die mit den Steuerbereichen (822, 824) zusammenwirken.

18. Vorrichtung nach Anspruch 17, bei der einer der Arme (156) ein Heizelement (34) der ersterwähnten Verschweißvorrichtung und der andere Arm (160) ein Kühlelement (36) trägt, und bei der die Stationen des genannten Drehkopfes (28) mit dem Heizelement (34) und dem Kühlelement (36) ausgerichtet sind.

19. Vorrichtung nach einem der Ansprüche 1 bis 18, mit einer Vorrichtung zum Formen von Taschen, bei der Taschen aus bedruckten Materialbahnen hergestellt werden, enthaltend eine einen Schlauch bildende Dornanordnung (880) mit einem hin und her beweglichen Dorn (882), dem Dorn zugeordneten Klemmvorrichtungen (892), die periodisch einen Schlauchbereich auf dem Dorn (882) festklemmen, so daß er sich mit demselben bewegt und einen zugeordneten Schlauch (T) vortreibt, sowie Antriebsvorrichtungen (932), um fortwährend den Dorn vorzuschieben und zurückzuschieben, sowie mit Mitteln, um den Vorwärtshub des Dorns (882) in Reaktion auf die Betätigung der Antriebsvorrichtungen zu verändern, um eine Übereinstimmung der Bedruckung der Materialbahnen mit den geformten Taschen zu erzielen.

**Revendications**

1. Appareil pour conformer le fond d'un tube scellé en un fond de sac plat et fournir le sac conformé à des moyens d'évacuation, comprenant une tourelle (28); des moyens sur lesquels est montée ladite tourelle (28) en vue d'y effectuer un mouvement indexé autour d'un axe fixe et généralement horizontal, ladite tourelle (28) comprenant une pluralité de postes et chacun desdits postes comprenant un ensemble à mandrins (26) qui comporte un mandrin intérieur (84), un mandrin extérieur (86) en un plongeur (88) pour chaque mandrin extérieur (86), le plongeur s'étendant à l'intérieur de ladite tourelle (28) en passant par ledit mandrin intérieur (84); des moyens à came (94) coopérant avec une extrémité intérieure dudit plongeur (88) pour positionner ledit mandrin extérieur (86) par rapport audit mandrin extérieur (84), et des moyens de scellement (34, 38) pour sceller à chaud des parties triangulaires (30) d'un fond de tube scellé à la partie de fond plate adjacente de celui-ci pour former le tube en un sac à fond plat; caractérisé en ce que l'appareil comprend des moyens d'orientation (42) pour coopérer avec le sac quand il est sur l'ensemble à mandrins (26) et faire tourner le sac autour de l'axe dudit ensemble à mandrins (26).

2. Appareil selon la revendication 1, caractérisé en ce que chaque ensemble à mandrins (26) comprend une partie de mandrin fixe (78) adjacente audit mandrin intérieur (84), et des moyens de serrage (102) qui peuvent coopérer avec ladite partie de mandrin fixe (78).

3. Appareil selon la revendication 2, caractérisé en ce que lesdits moyens de serrage (102) comprennent au moins un bras de serrage (112), un pivot (138) disposé centralement sur ledit bras de serrage (122) destiné au montage dudit bras de serrage (112) hors centre, des moyens à ressort (148) coopérant avec une partie d'extrémité dudit bras de serrage (122) pour solliciter ladite surface de serrage (136) en direction de ladite partie fixe de mandrin (78), et des moyens de manoeuvre (106) coopérant avec l'extrémité opposée dudit bras de serrage (112) pour surmonter sélectivement la sollicitation desdits moyens à ressort (148).

4. Appareil selon l'une quelconque des revendications 1 à 3, caractérisé en ce que ledit appareil comprend un support principal (54) se présentant sous la forme d'une paroi verticale séparant ladite machine en une moitié sanitaire de traitement des produits et en une moitié contenant la machinerie d'entraînement.

5. Appareil selon l'une quelconque des revendications précédentes, comportant également un dispositif de scellement à chaud (270) pour fermer des sacs et analogues, caractérisé en ce que ledit dispositif de scellement à chaud (270) comporte une paire d'organes parallèles (284, 286), des moyens (276, 278) destinés au montage desdits organes parallèles (284, 286) de manière qu'ils effectuent un mouvement axial séparé, lesdits organes parallèles (284, 286) possédant des extrémités adjacentes espacées face à la même direction, une première console (288) supportée par l'un desdits organes parallèles (284) et comprenant un premier organe de scellement à chaud (294) monté sur elle face à la même direction que lesdites extrémités des organes parallèles, une seconde console (287) supportée par l'autre desdits organes parallèles (286) et possédant un second organe de scellement à chaud (302) monté sur elle face à la direction opposée et face audit premier organe de scellement à chaud (294), des moyens de couplage (310) couplant lesdits organes parallèles les uns aux autres en vue de leur déplacement à l'unisson et en sens inverse, des moyend de pression (316) réagissant sur l'un desdits organes parallèles (286) en sollicitant lesdits organes de scellement à chaud (294, 302) sous une force contrôlée, des moyens mécaniques (334) pour exercer une réaction sur l'autre desdits organes parallèles (284) et écarter lesdits organes de scellement à chaud (294, 302) à l'encontre de la résistance desdits moyens de pression (312), et des moyens d'entraînement (340) pour actionner lesdits moyens mécaniques (334).

6. Appareil selon la revendication 5, lorsqu'elle est dépendante de la revendication 4, caractérisé en ce que ledit dispositifs de scellement à chaud (270) est monté sur ladite paroi de support principale alors que lesdits organes parallèles (284, 286) traversent ladite paroi (54).

7. Appareil selon l'une quelconque des revendications 1 à 6, comprenant un dispositif de scellement à chaud possédant un premier (366) et un second (400) organes de support, des moyens de montage (352, 384) sur lesquels sont montés lesdits organes de support (366, 400) en parallèle en vue d'un mouvement axial, des organes de scellement à chaud opposés (372, 410) supportés par lesdits organes de support (366, 400), des moyens d'entraînement (428) interconnectant lesdits organes de support (366, 400) en vue d'un mouvement axial à l'unisson; et lesdits moyens d'entraînement (428) comprenant des moyens de pression fluide (444) sollicitant lesdits organes de support (366, 400) vers les positions où lesdits organes de scellement à chaud (372, 410) sont en position de fonctionnement rapprochée, et des moyens mécaniques (448) pouvant être actionnés pour surmonter lesdits moyens de pression fluidique (444) et déplacer lesdits organes de support (366, 400) vers des positions séparant lesdits organes de scellement à chaud (372, 400) en vue de recevoir un article qui doit être scellé à chaud entre eux.

8. Appareil selon la revendication 7, caractérisé en ce qu'un autre organe de scellement à chaud (372A) est supporté par une partie intermédiaire dudit premier organe de support (366), un troisième organe de support (402) est monté immédiatement adjacent audit second organe de support (400), et un autre organe de scellement à chaud (410A) est supporté par ledit troisième organe de support (402) à l'opposé dudit autre organe de scellement à chaud (372A) en vue de coopérer avec lui.

9. Appareil selon l'une quelconque des revendications 1 à 8, comprenant un ensemble distributeur de bande continue comportant un ensemble à moyeu (476) possédant un moyeu (478) pour recevoir une bobine comportant un coeur tubulaire, et où ledit moyeu (478) est creux pour définir une chambre intérieure (480) et comporte des alésages radiaux (486) qui le traversent et qui sont espacés circonférentiellement, des broches d'ancrage de bobine (488) se trouvant dans lesdits alésages (486) alors que les extrémités intérieures des broches se prolongent dans ladite chambre (480) du moyeu, des moyens élastiques (516) résistant au mouvement radial vers l'extérieur desdites broches (488) et des moyens à came (506, 508) dans ladite chambre (480) dudit moyeu, coopérant avec l'extrémité intérieure de ladite broche (488) pour forcer les extrémités extérieures (510) desdites broches (488) vers l'extérieur au-delà dudit moyeu (478) pour venir en engagement avec une carcasse de bobine.

10. Appareil selon la revendication 9, caractérisé en ce qu'il comprend une paroi de séparation et de support combinée (54), un élément, d'écartement (468) fixé à une surface de ladite paroi (54) et entourant une ouverture pratiquée dans ladite paroi (54), une unité de commande (460) possédant une joue de montage (464) supportée par ledit élément d'écartement (468) de façon étanche (474) vis-à-vis de ce dernier et de la paroi (54), ladite unité de commande (460) possédant un arbre de commande (462), et des moyens de fixation amovible dudit moyeu (478) sur l'arbre de commande (462) de façon à tourner avec lui.

11. Appareil selon l'une quelconque des revendications 1 à 8, comprenant un ensemble distributeur de bande continue comportant un ensemble à moyeu (476) possédant un moyeu (478) pour recevoir une bobine ayant une carcasse tubulaire, une paroi de séparation et de support combinée (54), un élément d'écartement (468) fixé à une surface de ladite paroi (54) et entourant une ouverture pratiquée dans ladite paroi (54), une unité de commande (460) possédant une joue de montage (464) supportée par ledit élément d'écartement (468) de façon étanche (474) vis-à-vis de ce dernier et de la paroi (54), ladite unité de commande (460) comprenant un arbre de commande (462), et des moyens de fixation amovibles dudit moyeu (478) sur l'arbre de commande (462) de façon à tourner avec lui.

12. Appareil selon la revendication 11, caractérisé en ce que deux desdits ensembles (476) ont leurs moyeux (478) espacées différemment de ladite paroi (54), et en ce que lesdits éléments d'écartement (468, 526) dudit ensemble (476) sont de longueurs différentes, pour faciliter ledit espacement différentiel.

13. Appareil selon l'une quelconque des revendications 1 à 12, comprenant un dispositif combiné de scellement à chaud et de découpe (530) pour découper un tube continu en des sections de longueur prédéterminée et pour fermer une extrémité de chaque section de tube, ledit dispositif (530) comprenant une console de support (532), un pivot (540) supporté par ladite console de support (532), une paire d'organes coopérant à la manière de lames de ciseaux (565, 570) montés de façon pivotante sur ledit pivot (540) et supportant des organes de scellement à chaud coopérants (568, 573), un élément à lame (574) monté de façon pivotante sur ledit pivot (540) et coopérant avec lesdits organes de scellement à chaud (568, 573) pour sectionner le tube en un endroit immédiatement adjacent à une partie pincée et scellée à chaud du tube pour définir une portion de tube ayant une extrémité fermée et une extrémité ouverte, et des moyens de manoeuvre reliés aux organes semblables à des lames (570) et audit élément à lame (574) pour les faire pivoter en synchronisme.

14. Appareil selon la revendication 13, caractérisé en ce que ladite console (532) est supportée par une paroi (54) de la machine, lesdits moyens de manoeuvre comprenant des manchons de guidage (580, 606) supportés par ladite paroi (54) de la machine, des plongeurs (592, 608) montés dans lesdits manchons de guidage (580, 606) en vue d'y effectuer un mouvement axial de va-et-vient, lesdits plongeurs (592, 608) comprenant un plongeur séparé (600, 614) pour chacun desdits organes semblables à des lames (560, 570) et pour ledit élément à lame (574), une connexion (596, 612, 618) reliant lesdits plongeurs (592, 600, 608, 614) auxdits organes respectifs semblables à des lames (560, 570) et audit élément à lame (574), et des moyens d'entraînement (624) couplés auxdits plongeurs (592, 600, 608, 614).

15. Appareil selon l'une quelconque des revendications 1 à 14, comprenant un ensemble à rouleau danseur destiné à être utilisé avec un dispositif d'alimentation de bande continue, caractérisé en ce que ledit ensemble comprend des arbres supérieur (684) et inférieur (687), des pignons (686, 700) espacés axialement sur lesdits arbres (684, 696) et en alignement vertical, des courroies sans fin (706) entraînées sur lesdits pignons en alignement (686, 700), un arbre à rouleau danseur (716) s'étendant entre et étant fixé auxdites courroies (702) parallèlement audit arbre supérieur (684) et audit arbre inférieur (696), un rouleau danseur (724) supporté par ledit arbre à rouleau danseur (716) en vue d'un mouvement vertical contrôlé, et des moyens de commande (788) couplés à l'un desdits arbres supérieur (684) et inférieur (696) pour commander leur rotation.

16. Appareil selon la revendication 15, caractérisé en ce que lesdits arbres supérieurs (684, 744) et inférieur (698) sont montés côte à côte en en ce qu'il est prévu deux desdits rouleaux danseurs (724) montés et commandés séparément, un arbre (744) dudit second jeu d'arbres étant couplé à un autre moyen de commande (768), et ledit arbre (744) étant coaxial et comprenant des arbres intérieur et extérieur (740, 746).

17. Appareil selon l'une quelconque des revendications 1 à 16, comportant un mécanisme comprenant une paire de bras montés de façon pivotante (156, 160), et un mécanisme d'entraînement pour déplacer séquentiellement lesdits bras (156, 160) vers des positions actives et de repos, ledit mécanisme d'entraînement qui comprend chacun desdits bras (155, 160) comportant une partie de commande (826, 824), un arbre d'entraînement (840) et une came (844) supportée par ledit arbre d'entraînement (840), ladite came (844) comportant des segments séparés (826, 828) coopérant avec lesdites parties de commande (822, 824).

18. Appareil selon la revendication 17, caractérisé en ce que l'un (156) desdits bras supporte un élément chauffant (34) desdits moyens de scellement premièrement mentionnés et l'autre (160) desdits bras supporte un élément de refroidissement (36), et en ce que lesdits postes de la tourelle (28) sont en alignement avec ledit élément chauffant (34) et avec ledit élément de refroidissement (36).

19. Appareil selon l'une quelconque des revendications 1 à 18, caractérisé en ce qu'il comprend un appareil de formage de poches pour former des poches à partir d'une bande continue imprimée, et un ensemble à mandrins de formage de tube (880) comportant un mandrin animé d'un mouvement de va-et-vient (882); des moyens de serrage (892) associés audit mandrin (882) en vue de serrer périodiquement une partie de tube sur ledit mandrin (882) de façon à se déplacer avec lui et faire avancer un tube associé (T), des moyens d'entraînement (932) pour faire avancer et rétracter de façon répétée ledit mandrin, et des moyens pour modifier la course d'avance dudit mandrin (882) en réponse à la manoeuvre desdits moyens d'entraînement pour maintenir l'alignement de l'impression existant sur ladite bande continue avec lesdites poches formées.

FIG. 1

FIG. 2

0 025 711

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

0 025 711

## FIG. 21

## FIG. 25

## FIG. 23

FIG. 22

FIG. 24

FIG. 26

FIG. 27

FIG. 28

0 025 711

FIG. 29

FIG. 30

FIG. 31

FIG. 32

13

FIG. 33

FIG. 35

FIG. 34

FIG. 36

# FIG. 37

# FIG. 39

# FIG. 38

# FIG. 40

FIG. 41

FIG. 42

FIG. 43

FIG. 45

0 025 711

FIG. 44

FIG. 47

FIG. 46

21

FIG. 48

FIG. 49